# EUROPEAN PATENT APPLICATION

(11) **EP 4 442 498 A1**
(43) Date of publication of application: **09.10.2024**
(21) Application number: 24163491.4
(22) Date of filing: 14.03.2024
(51) Int. Cl.: B60M 1/30, B60M 5/00, B61L 1/18, E01B 11/00, E01B 11/54

(54) **JOINTED TRACK WITH ELECTRICALLY ISOLATED SECTIONS AND METHOD FOR INHIBITING STRAY CURRENT CORROSION USING THE JOINTED TRACK**

(30) Priority: 15.03.2023 GB 202303811
(71) Applicant: British Steel Limited, Scunthorpe, North Lincolnshire DN16 1BP (GB)
(72) Inventor: TROWSDALE, Andrew, Scunthorpe, DN16 1BP (GB); WILSON, Andrew, Scunthorpe, DN16 1BP (GB); JOHNSON, Christopher, Scunthorpe, DN16 1BP (GB)
(74) Representative: Appleyard Lees IP LLP

(57) **Abstract**

A jointed track 20 for a track circuit 2A or a railway electrification system 2B, the jointed track 20 comprising: a series of rails 21, including a first rail 21A, a second rail 21B and a third rail 21C, jointed serially end-to-end to provide a running surface; wherein the first rail 21A and the second rail 21B are mutually electrically isolated; wherein the second rail 21B and the third rail 21C are mutually electrically isolated; and wherein the first rail 21A and the third rail 21C are mutually electrically coupled.

## Description

### Field

The present invention relates to railway tracks.

### Background to the invention

Generally, corrosion of railway rails reduces a longevity and/or an integrity thereof. The rails are typically exposed to moisture, which may be persistent, particularly in poorly drained locations such as level crossing and sheltered locations such as tunnels. For example, the foot of a rail may sit on wet ground and/or be exposed to a wet, damp or humid environment. Furthermore, the rails may be exposed to salts, elevated electrical potentials and/or temperatures. Hence, corrosion may be accelerated. It is known to apply protective coatings to steel rails. Coatings are typically used to protect against pitting, galling and general loss of section due to corrosion.

Some coatings, such as those based on glass flake epoxy resins or glass flake polyesters, can provide good corrosion protection. However, problems occur when coatings become physically damaged, for example chipped or pulled from the surface. This can occur during transport and handling of rails, for example when using heavy lifting equipment. If any flaws in the coatings are not spotted, they represent a weak point in the rail where corrosion can develop. Other coatings, such as those containing metals for example zinc, aluminium and/or nickel, may be less affected by physical damage but flaws in these coatings may also be problematic. Particularly, penetration of moisture into the flaws may cause localised and/or accelerated corrosion, resulting in blistering of these coatings, thereby increasing a number density and/or area density of flaws.

Hence, there is a need to improve corrosion protection of rails.

### Summary of the invention

A first aspect provides a jointed track for a track circuit or a railway electrification system, the jointed track comprising:
a series of rails, including a first rail, a second rail and a third rail, jointed serially end-to-end to provide a running surface;
wherein the first rail and the second rail are mutually electrically isolated;
wherein the second rail and the third rail are mutually electrically isolated; and
wherein the first rail and the third rail are mutually electrically coupled.

A second aspect provides a track circuit or a railway electrification system comprising a first jointed track according to the first aspect.

A third aspect provides a railway track comprising a track circuit or a railway electrification system according to the second aspect.

A fourth aspect provides a kit of parts for a jointed track for a track circuit or a railway electrification system, comprising:
a set of rails including a first rail, a second rail and a third rail;
optionally, a set of insulated rail joints, IRJs, including a first IRJ, for mutually joining serially end-to-end the first rail and the second rail and optionally, a second IRJ, for mutually joining serially end-to-end the second rail and the third rail; and
optionally, a first electrical coupling for mutually electrically coupling the first rail and the third rail.

A fifth aspect provides a method of inhibiting stray current corrosion of a track circuit or a railway electrification system at a level crossing or in a tunnel, the method comprising:
providing a first rail, a second rail and a third rail;
spanning the level crossing or a part of the tunnel with the second rail;
joining serially end-end the first rail, the second rail and the third rail, comprising mutually electrically isolating the first rail and the second rail and mutually electrically isolating the second rail and the third rail; and
mutually electrically coupling the first rail and the third rail.

A sixth aspect provides a coated rail having bolt holes for an insulated rail joint, IRJ, at one or both ends, optionally wherein the rail has a length of at most 18 m.

### Detailed Description of the Invention

According to the present invention there is provided a jointed track for a track circuit or a railway electrification system, as set forth in the appended claims. Also provided is a track circuit or a railway electrification system, a railway track comprising a track circuit or a railway electrification system, a kit of parts and a method of inhibiting stray current corrosion. Other features of the invention will be apparent from the dependent claims, and the description that follows.

The first aspect provides a jointed track for a track circuit or a railway electrification system, the jointed track comprising:
a series of rails, including a first rail, a second rail and a third rail, jointed serially end-to-end to provide a running surface;
wherein the first rail and the second rail are mutually electrically isolated;
wherein the second rail and the third rail are mutually electrically isolated; and
wherein the first rail and the third rail are mutually electrically coupled.

In this way, the second rail is electrically isolated from the first rail and the third rail while the first rail and the third rail are mutually electrically coupled. In this way, electrical current may flow through the mutually electrically coupled first rail and third rail while not flowing through the second rail, mutually isolated therefrom. In other words, the first rail and the third rail carry electrical current, in use, while the second rail does not carry electrical current, in use. In this way, electrochemical corrosion of the second rail may be inhibited, for example locally, while structure and/or function of the jointed track, for example in a track circuit or in a railway electrification system is otherwise maintained. In this way, stray current corrosion of the second rail in a track circuit may be inhibited, for example locally such as at a level crossing or in a tunnel. In this way, electrochemical accelerated corrosion of the second rail in a railway electrification system may be inhibited, for example locally such as at a level crossing or in a tunnel.

Particularly, the inventors have determined that problems of localised, accelerated electrochemical corrosion of conventional railway tracks may be addressed and/or overcome by locally electrically isolating parts thereof. While conventional railway tracks are generally well-drained, for example using ballasting, some parts of the conventional railway tracks may be relatively poorly drained and/or exposed to salts and/or debris, such as at level crossings and in tunnels. While well-drained conventional railway tracks may have a longevity of about 20 years, these parts of the conventional railway tracks that are relatively poorly drained and/or exposed to salts and/or debris may have a longevity of only 6 months, for the same usage. Such a relatively short longevity of these parts of the conventional railway tracks requires maintenance and/or replacement thereof at frequent intervals, for safety and/or reliability, also requiring closure of the railway track and optionally, roads at a level crossing, for example. The inventors have determined that these parts of the conventional railway tracks are particularly susceptible to electrochemical accelerated corrosion, for example due to stray current corrosion in a track circuit or electrochemical accelerated corrosion in a railway electrification system, due to the presence of water (since relatively poorly drained) and/or exposure to ions (from salts and/or debris). Furthermore, electrical conductors for example pipes and/or cables for utilities proximal (surface or subsurface) these parts of the conventional railway tracks may provide conductive pathways during the electrochemical accelerated corrosion of these parts of the conventional railway tracks while these electrical conductors may also be subject to accelerated corrosion due to the electrical current flowing therethrough. Hence, by electrically isolating the second rail, localised, accelerated electrochemical corrosion thereof may be inhibited, thereby extending a longevity of the second rail compared with conventional railway tracks, while upholding safety and/or reliability. In this way, a frequency of maintenance and/or replacement of the second track is reduced compared with conventional railway tracks, thereby limiting closure of the railway track and optionally, roads at a level crossing, for example.

It should be understood that when a train is present, its axles short (shunt) the rails (including the second rail) together, and hence when a train is present, a transient stray current may flow through the second rail. Nevertheless, since stray currents do not flow through the second rail when a train is absent and since presence of a train is generally limited compared with absence of a train, a time during which stray currents flow in the second rail is hence significantly diminished, for example by 1, 2, 3, 4 or more orders of magnitude compared with a conventional rail of a track circuit or a railway electrification system, for example.

### Jointed track

The first aspect provides the jointed track.

Jointed track is a term of the art. Generally, jointed track is made using lengths of rail, usually around 20 m (66 ft) long (in the UK) and 39 or 78 ft (12 or 24 m) long (in North America), bolted together using perforated steel plates known as fishplates (UK) or joint bars (North America). Hence, it should be understood that the jointed track includes joints, for example between the first rail and the second rail and between the second rail and the third rail. It should be understood that the jointed track may include other joints, for example in the first rail, the second rail and/or the third rail.

### Track circuit or railway electrification system

The jointed track is for (i.e. suitable for) a track circuit or a railway electrification system. The jointed track may be suitable for other applications, for example wherein current flows through the first rail and the second rail.

### Series of rails

The jointed track comprises the series of rails, including the first rail, the second rail and the third rail, as described below in more detail.

In one example, the series of rails includes N rails, wherein N is a natural number greater than or equal to 3, for example 3, 4, 5, 6, 7, 8, 9, 10 or more.

The series of rails is jointed serially end-to-end to provide a running surface, for example for a wheel of a train. It should be understood that the series of rails is jointed serially (i.e. sequentially, in tandem), whereby a wheel of train runs successively on the first rail, the second rail and the third rail, for example. In one example, the first rail has a first end and an opposed second end, the second rail has a first end and an opposed second end and the third rail has a first end and an opposed second end, wherein the first end of the first rail and the first end of the second rail are mutually jointed and wherein the second end of the second rail and the second end of the third rail are mutually jointed.

### Mutually electrically isolated

The first rail and the second rail are mutually electrically isolated, for example using an insulated rail joint, as described below. In one example, an electrical resistance between the first rail and the second rail is at least 5 MΩ, preferably at least 10 MΩ, more preferably at least 20 MΩ, most preferably at least 25 MΩ. In one example, an electrical resistance between the first rail and the second rail is in a range from 5 MΩ to 250 MΩ, preferably in a range from 10 MΩ to 200 MΩ, more preferably in a range from 20 MΩ to 150 MΩ, most preferably in a range from 25 MΩ to 100 MΩ.

The second rail and the third rail are mutually electrically isolated, for example using an insulated rail joint, as described below. In one example, an electrical resistance between the second rail and the third rail is at least 5 MΩ, preferably at least 10 MΩ, more preferably at least 20 MΩ, most preferably at least 25 MΩ. In one example, an electrical resistance between the second rail and the third rail is in a range from 5 MΩ to 250 MΩ, preferably in a range from 10 MΩ to 200 MΩ, more preferably in a range from 20 MΩ to 150 MΩ, most preferably in a range from 25 MΩ to 100 MΩ.

In one example, the jointed track comprises a set of insulated rail joints, IRJs, including a first IRJ;
wherein the first rail and the second rail are mutually jointed serially end-to-end by the first IRJ.

Suitable IRJs are known. IRJs included bonded insulated rail joints and insulated block joints, IBJs.

Bonded insulated rail joints are typically used to separate electric circuit in tracks and turnouts. Usually used in long welded rails, bonded insulated rail joints must be able to transfer longitudinal forces arising in the track. Bonded insulated rail joints typically provide good electrical resistance in the long welded rails, suitable for impact-free transition between rails, reduce noise, increase travelling comfort and prolong the service life of steel rail and/or available with typically four holes or six holes.

Insulated block joints, IBJs, such as poly-insulated rail joints, include a (typically) polymeric (such as polyurethane, perspex or nylon) plate between ends of the jointed rails and/or between the fishplates and the webs of the rails. The polymeric plate typically provides reliable circuit isolation and/or maintains electrical stability in the heavy rails under varying environmental conditions. IBJs typically provide reliable circuit isolation and/or maintain the physical and electrical stability in rail track under different conditions, the polymeric plate bonded to the rail joint may provide superior insulation between the rails, the plate and the rail joint may form a robust structure, they can serve for many years with little or no maintenance, different specifications are available for different sizes of rail joint and/or have relatively simple structures to facilitate installation.

In one example, the first IRJ comprises and/or is an insulated block joint, IBJ, for example as described previously. Suitable IBJs are known.

In one example, the first IRJ provides a first gap (i.e. a space, a void) between respective ends of the first rail and the second rail. In this way, mutual electrical isolation is provided, at least in part, by the gap.

In one example, the first IRJ comprises a first electrical insulator, for example a polymeric plate such as comprising nylon, perspex and/or polyurethane, disposed between respective ends of the first rail and the second rail. In this way, mutual electrical isolation is provided, at least in part, by the first electrical insulator.

In one example, the set of IRJs includes a second IRJ;
wherein the second rail and the third rail are mutually jointed serially end-to-end by the second IRJ. The second IRJ may be as described with respect to the first IRJ.

### Mutually electrically coupled

The first rail and the third rail are mutually electrically coupled, for example using a cable. In one example, an electrical resistance between the first rail and the third rail is at most 1 kΩ, preferably at most 100 Ω, more preferably at most 10 Ω, most preferably at most 5 Ω. In one example, an electrical resistance between the first rail and the third rail is in a range from 5 Ω to 1 kΩ, preferably in a range from 100 Ω to 500 Ω, more preferably in a range from 10 Ω to 100 Ω, most preferably in a range from 5 Ω to 50 Ω.

In one example, the jointed track comprises a first electrical coupling, for example a cable; wherein the first rail and the third rail are mutually electrically coupled via the first electrical coupling. Suitable cables are known.

### Rails

In one example, a length of the first rail and/or a length of the third rail is less than a length of the second rail. That is, the second rail is relatively longer than the first rail and/or the third rail. For example, the first rail may have a length of 9 m, the second rail may have a length of 18 m for spanning a level crossing and the third rail may have a length of 9 m, providing a total length of 36 m.

In one example, a length of the first rail and/or a length of the third rail is greater than a length of the second rail. That is, the second rail is relatively shorter than the first rail and/or the third rail.

In one example, the jointed track has a length in a range from 6 m to 360 m, for example from 15 m to 250 m, preferably in a relatively shorter range from about 15 m to about 60 m for example about 18 m, about 36 m, about 50 m or about 60 m, and/or preferably in a relatively longer range from 60 m to 150 m, more preferably in a range from 90 m to 130 m, for example 108 m or 120 m.

In one example, a length of the second rail is in a range from 4 m to 40 m, preferably in a range from 7 m to 20 m, more preferably in a range from 10 m to 15 m. In this way, the second rail may span a level crossing, for example. For reference, a typical single carriage way has a standard width of 3.65 m in the UK. In one example, a joint between the first rail and the second rail is in a range from 1 m to 5 m, preferably in a range from 2 m to 4 m, for example 3 m or about 3 m, from, for example, a level crossing or tunnel entrance, whereby the joint is disposed on ballast (i.e. well-drained). A joint between the second rail and the third rail may be as described with respect to a joint between the first rail and the second rail mutatis mutandis.

In one example, the second rail comprises and/or is coated rail, as described below in more detail. In this way, corrosion protection of the second rail is improved. In one example, the second rail is disposed at most partly on ballast or equivalent (i.e. poorly-drained). In one example, the second rail is not disposed on ballast or equivalent (i.e. poorly-drained).

In one example, the second rail comprises and/or is a jointed rail, an unjointed rail or a continuously welded rail, CWR. In one preferred example, the second rail comprises and/or is an unjointed rail, for example a single length spanning a level crossing. In this way, an appropriate length of rail may be provided as the second rail, for example spanning a level crossing.

In one example, the first rail and/or the third rail comprises and/or is an uncoated rail. Since the first rail and/or the third rail may be disposed, for example wholly, on ballast or equivalent (i.e. well-drained), uncoated rail is suitable while relatively lower cost than coated rail. In one example, the first rail and/or the third rail is disposed, for example wholly, on ballast or equivalent (i.e. well-drained).

In one example, the first rail and/or the third rail comprises and/or is a jointed rail, an unjointed rail or a continuously welded rail, CWR. In one preferred example, the first rail and/or the third rail comprises and/or is an unjointed rail or a continuously welded rail, CWR. In this way, a
In one example, the rail (for example, the first rain, the second rail and/or the third rail) comprises and/or is a rolled section, a hot-rolled rail section such as a rails or a profile including a sleeper, a drawn section such as bar, rod or wire, an extruded section, and/or a castings. In one example, the rail is a railway track part (also known as a component). In one example, the rail comprises a flat-bottom rail, a flat-bottom vignole rail, a crane rail, a tram rail, a grooved rail, a check rail or a conductor rail.

In particular, steels that may be used in the present invention include steels according to rail standards and grades as detailed below and commonly used structural steels such as EN 10025 grades S235, S275, S355, and S450, and equivalent standards and/or grades. Suitable steel compositions include those commonly used in rails according to standards such as UIC 860-0, EN 13674-1, EN 13674-2, IRS, British Steel standards, AREMA and/or EN 14811. For example, suitable steel compositions include UIC 860-0 Grades 700, 900A and 900B; EN 13674-1 grades R200, R220, R220G1, R260, R260V, R260Mn, R350HT, R350LHT and R370CrHT; EN 13674-2 grade R260Cr; IRS grades 880 and 1080HH; British Steel grades ML200, ML260, ML330, BLF320, BLF360, HP335, SF350, SFL350, MHH375 and MHH388; AREMA grades carbon standard, low alloy standard, low alloy intermediate, carbon high strength and low alloy high strength; EN 14811.

In one example, the rail comprises 0.1 to 1.5 wt.% carbon, suitably from 0.2 to 1.3 wt.%, preferably from 0.25 to 1.25 wt.%, suitably from 0.3 to 1.2 wt.%, for example from 0.35 to 1.1 wt.%. In one example, the rail comprises from 0.01 to 2.0 wt.% or 0.01 to 1.5 wt.% silicon, preferably 0.05 to 1.2 wt.%, preferably from 0.1 to 1.1 wt.%. In one example, the rail comprises from 0.1 to 2.5 wt.% manganese, preferably from 0.25 to 2.2 wt.%, more preferably from 0.5 to 2 wt.%, suitably from 0.6 to 1.8 wt.%. In one example, the rail comprises chromium in an amount of from 0.1 to 3 wt.%, for example from 0.5 to 1.5 wt.%. In one example, the rail comprises less than 0.2 wt.% (by mass) chromium. Suitably the steel rail comprises less than 0.5 wt.% phosphorous, preferably less than 0.05 wt.% phosphorous. In one example, the rail comprises less than 0.005 wt.% aluminium. In one example, the rail comprises less than 0.25 wt.% vanadium. In one example, the rail comprises less than 0.02 wt.% nitrogen. In one example, the rail comprises 0.25 to 1.25 wt.% carbon, 0.05 to 1.2 wt.% silicon and 0.5 to 2 wt.% manganese.

Common rail joints (also known as fish plates) are typically used to joint rail, having 4 holes or 6 holes. Different standards of fish plates are available for BS, UIC, GB, DIN, Africa, America rails.

### Fourth rail and fifth rail

In one example, the series of rails includes a fourth rail and a fifth rail;
wherein the third rail and the fourth rail are mutually electrically isolated; and
wherein the fourth rail and the fifth rail are mutually electrically coupled.

For example, the fourth rail may span a second level crossing in same track circuit. For example, the second rail may be disposed at or proximal the entrance (i.e. one end) of a tunnel and the fourth rail may be disposed at or proximal the exit (i.e. the other end) of the tunnel.

### Track circuit or railway electrification system

The second aspect provides a track circuit or a railway electrification system comprising a first jointed track according to the first aspect.

In one example, the track circuit or the railway electrification system comprises a second jointed track according to the first aspect, for example aligned with or offset from the first jointed track. The second jointed track may be as described with respect to the first jointed track mutatis mutandis.

In one example, the first jointed track and the second jointed track provide a pair (e.g. matched pair) of jointed tracks, for example mutually aligned.

In one example, the track circuit or the railway electrification system comprises a first relay electrically coupled to the first rail of the first jointed track.

In one example, the track circuit or the railway electrification system comprises a first power supply electrically coupled (directly or indirectly) to the third rail of the first jointed track.

### Coating

In one example, the first rail, the second rail and/or the third rail comprises and/or is a coated rail, for example having a coating comprising a metal.

In one example, the metal comprises Zn in an amount of at least 50 wt.%, preferably at least 60 wt.%, suitably at least 70 wt.%, for example at least 75 wt.% or at least 80 wt.%. In one example, the metal comprises Al in an amount of at least 1 wt.%, preferably at least 3 wt.%, suitably at least 5 wt.%, preferably at least 7 wt.%, for example at least 8 wt.% or at least 10 wt.%. In one example, Zn and Al together comprise at least 80 wt.% of the metal, preferably at least 90 wt.%, suitably at least 95 wt.%, for example at least 99 wt.%. In one example, the metal comprises from 70 to 95 wt.% Zn and from 5 to 25 wt.% Al, preferably from 80 to 90 wt.% Zn and from 10 to 20 wt.% Al, for example about 82 to 88 wt.% Zn and from about 12 to 18 wt.% Al such as about 85 wt.% Zn and about 15 wt.% Al. In one example, the metal consists essentially of Al and Zn.

In one example, the metal consists of from 5 wt.% to 25 wt.% Al, optionally from 0 to 10 wt.% Mg, optionally from 0 to 5 wt.% Cu, optionally from 0 to 5 wt.% Ag, balance Zn and unavoidable impurities.

In one example, the coating is as described in GB 2583191 A and/or GB 2583191 B, the subject matter of which is incorporated herein in entirety by reference.

In one example, the coating comprises a plurality of layers, including a first layer and a second layer;
wherein the first layer overlays at least a part of a surface of the rail and wherein the first layer comprises and/or is a porous first layer, having pores therein, formed from a metal preferably comprising Zn, Al and/or Mg; and
wherein the second layer overlays at least part of a surface of the first layer and wherein the second layer comprises and/or is a hydrophobic second layer preferably comprising a silane and/or a siloxane.

In this way, the rail has a coating having an improved corrosion resistance and/or adhesion, compared with conventional coatings

In one example, the coating is provided by a method comprising:
depositing the first layer on at least a part of the surface of the rail, wherein the first layer comprises and/or is a porous first layer, having pores therein, formed from a metal preferably comprising Zn, Al and/or Mg; and
providing the second layer on at least part of the first layer by applying a composition, preferably comprising a silane and/or a siloxane, in a carrier thereon and removing at least some of the carrier, thereby providing the second layer, wherein the second layer comprises and/or is a hydrophobic second layer, preferably comprising the silane and/or the siloxane.

In this way, the coating inhibits penetration of moisture towards the rail and/or improves a resistance of the coating to blistering, compared with conventional coatings. Particularly, the hydrophobic second layer, overlaying the first layer, inhibits and/or prevents penetration (i.e. ingress) of moisture (for example, water) into the pores, thereby reducing corrosion of the first layer and/or of the rail. Blistering conventionally results due to corrosion, for example localized corrosion, of the rail and/or the metal, such as Zn, Al and/or Mg, for example at and/or proximal to the surface of the rail. Particularly, the corrosion products, for example oxides, have relatively lower densities compared with Fe or these metals, thereby blistering the coating. However, the second layer reduces and/or eliminates such blistering, by inhibits and/or prevents penetration (i.e. ingress) of moisture (for example, water) into the pores, thereby reducing corrosion of the first layer and/or of the rail.

The method is of providing the coating comprising a plurality of layers, including the first layer and the second layer, on the surface of the rail.

It should be understood that the first layer overlays at least a part of the surface of the rail and the second layer overlays at least a part of the first layer. In one example, the first layer overlays at least 50%, preferably at least 60%, more preferably at least 70%, even more preferably at least 80%, most preferably at least 90%, for example at least 95%, 97.5%. 99% or 100% of the surface of the rail, by area thereof. In one example, the first layer overlays at most 50%, preferably at most 60%, more preferably at most 70%, even more preferably at most 80%, most preferably at most 90%, for example at most 95%, 97.5%. 99% or 100% of the surface of the rail, by area thereof. In one example, the second layer overlays at least 50%, preferably at least 60%, more preferably at least 70%, even more preferably at least 80%, most preferably at least 90%, for example at least 95%, 97.5%. 99% or 100% of the first layer, by area thereof. In one example, the second layer overlays at most 50%, preferably at most 60%, more preferably at most 70%, even more preferably at most 80%, most preferably at most 90%, for example at most 95%, 97.5%. 99% or 100% of the first layer, by area thereof. In one example, the first layer overlays at least a part of the surface of the rail exposed to moisture in use and/or subject to stress, fatigue and/or erosion. In one example, the first layer overlays the foot or a part thereof, for example a bottom of foot and/or sides thereof, and optionally, at least a part of the web extending from the foot towards the head and/or at least a part of the head, for example sides thereof. In one example, the first layer does not overlay the running surface or a part thereof.

In one example, the first layer directly overlays at least a part of the surface of the rail, without any interlayers therebetween. In one example, one or more interlayers are provided between the surface of the rail and the first layer.

In one example, the second layer directly overlays at least a part of the first layer, without any interlayers therebetween. In one example, one or more interlayers are provided between the first layer and the second layer.

In one example, the second layer is an outermost layer, without any further layers thereover. In one example, one or more layers are provided on the second layer.

### Depositing the first layer

The method comprises depositing the first layer on at least a part of the surface of the rail, wherein the first layer comprises and/or is a porous first layer, having pores therein, formed from a metal preferably comprising Zn, Al and/or Mg.

In this way, the metal of the first layer provides galvanic protection of the rail. More generally, in one example, the first layer is formed from a metal having a lower electrode potential than the rail.

**Table 1: Simplified galvanic series to select the metal**

| **Metal** | **Potential with respect to a Cu:CuSO₄ reference electrode in neutral pH environment (V)** |
|---|---|
| Carbon, Graphite, Coke | +0.3 |
| Platinum | 0 to -0.1 |
| Mill scale on Steel | -0.2 |
| High Silicon Cast Iron | -0.2 |
| Copper, brass, bronze | -0.2 |
| Mild steel in concrete | -0.2 |
| Lead | -0.5 |
| Cast iron (not graphitized) | -0.5 |
| Mild steel (rusted) | -0.2 to -0.5 |
| Mild steel (clean) | -0.5 to -0.8 |
| Commercially pure aluminium | -0.8 |
| Aluminium alloy (5% zinc) | -1.05 |
| Zinc | -1.1 |
| Magnesium Alloy (6% Al, 3% Zn, 0.15% Mn) | -1.6 |
| Commercially Pure Magnesium | -1.75 |

In one example, the first layer provides a contiguous or a semi-contiguous boundary or interface with the surface of the rail. Bonding of the first layer with (i.e. to) the rail (i.e. the surface thereof) may not be complete and/or uniform. In one example, the first layer bonds at least 50%, preferably at least 60%, more preferably at least 70%, even more preferably at least 80%, most preferably at least 90%, for example at least 95%, 97.5%. 99% or 100% of the surface of the rail overlaid by the first layer, by area thereof. In one example, the first layer bonds at most 50%, preferably at most 60%, more preferably at most 70%, even more preferably at most 80%, most preferably at most 90%, for example at most 95%, 97.5%. 99% or 100% of the surface of the rail overlaid by the first layer, by area thereof.

In one example, the metal comprises Cu and/or Ag. Cu and/or Ag may provide an antibacterial effect and thereby reduce or prevent bacterial corrosion of the steel. In one example, the metal additionally and/or comprises Zn. ZnO may provide an antibacterial effect and thereby reduce or prevent bacterial corrosion of the steel.

In one example, the metal comprises Zn in an amount of at least 50 wt.%, preferably at least 60 wt.%, suitably at least 70 wt.%, for example at least 75 wt.% or at least 80 wt.%. In one example, the metal comprises Al in an amount of at least 1 wt.%, preferably at least 3 wt.%, suitably at least 5 wt.%, preferably at least 7 wt.%, for example at least 8 wt.% or at least 10 wt.%. In one example, Zn and Al together comprise at least 80 wt.% of the metal, preferably at least 90 wt.%, suitably at least 95 wt.%, for example at least 99 wt%. In one example, the metal comprises from 70 to 95 wt.% Zn and from 5 to 25 wt.% Al, preferably from 80 to 90 wt.% Zn and from 10 to 20 wt.% Al, for example about 82 to 88 wt.% Zn and from about 12 to 18 wt.% Al such as about 85 wt.% Zn and about 15 wt.% Al. In one example, the metal consists essentially of Al and Zn.

In one example, the metal consists of from 5 wt.% to 25 wt.% Al, optionally from 0 to 10 wt.% Mg, optionally from 0 to 5 wt.% Cu, optionally from 0 to 5 wt.% Ag, balance Zn and unavoidable impurities.

The above amounts refer to the content of the metal before deposition and/or as deposited on the rail. It should be understood that the metal may comprise a different ratio of Zn and/or Al, for example, before deposition, depending on the deposition method. For example, if the metal is applied by thermal spraying, a proportion of a more volatile element may be lost during the deposition.

The metal may be applied to the rail as an alloy and/or as a pseudo alloy, for example by co-thermal spraying. However, other compounds may form as part of the depositing and/or thereafter. Further compounds which may be present in the coating include oxides, hydroxides, carbonates and/or mixtures thereof. For example, the further components may include: an oxide, for example zinc oxide, aluminium oxide and/or mixed zinc - aluminium oxide; a hydroxide, for example zinc hydroxide, aluminium hydroxide and/or mixed zinc - aluminium hydroxide; a carbonate, for example zinc carbonate, aluminium carbonate, and/or mixed zinc - aluminium carbonate; and/or mixtures thereof.

In one example, depositing the first layer comprises thermal spraying, preferably arc spraying (also known as wire arc spraying), the metal onto the surface of the rail.

Generally, thermal spraying methods are processes in which melted (or heated) materials are sprayed onto a surface (i.e. of the rail). The "feedstock" (coating precursor) is heated by electrical (plasma or arc) or chemical means (combustion flame). Thermal spraying can provide thick coatings (i.e. the first layer) (approximate thickness range is 20 microns to several mm, depending on the process and feedstock), over a large area and/or of a specific targeted area of a large article at high deposition rate as compared to other coating processes such as electroplating, physical and chemical vapor deposition. Coating materials available for thermal spraying include metals, alloys, ceramics, plastics and composites. They are fed in powder or wire form, heated to a molten or semimolten state and accelerated towards substrates in the form of micrometer-size particles. Combustion or electrical arc discharge is usually used as the source of energy for thermal spraying, for example high velocity oxy-fuel coating spraying (HVOF). Resulting coatings are made by the accumulation of numerous sprayed particles. The surface may not heat up significantly, allowing the coating of flammable substances. Coating quality is usually assessed by measuring its porosity, oxide content, macro and micro-hardness, bond strength and surface roughness. Generally, the coating quality increases with increasing particle velocities.

In one example, the thermal spraying is selected from a group comprising: plasma spraying, detonation spraying, wire arc spraying, flame spraying, high velocity oxy-fuel coating spraying (HVOF), high velocity air fuel (HVAF), warm spraying and cold spraying.

Wire arc spray is a form of thermal spraying where two consumable metal wires are fed independently into the spray gun. These wires are then charged and an arc is generated between them. The heat from this arc melts the incoming wire, which is then entrained in an air jet from the gun. This entrained molten feedstock is then deposited onto a substrate with the help of compressed air, which solidifies as splat particles. This process is commonly used for metallic, heavy coatings.

Plasma transferred wire arc (PTWA) is another form of wire arc spray which deposits a coating on the internal surface of a cylinder, or on the external surface of a part of any geometry. It is predominantly known for its use in coating the cylinder bores of an engine, enabling the use of Aluminum engine blocks without the need for heavy cast iron sleeves. A single conductive wire is used as "feedstock" for the system. A supersonic plasma jet melts the wire, atomizes it and propels it onto the substrate. The plasma jet is formed by a transferred arc between a non-consumable cathode and the type of a wire.

After atomization, forced air transports the stream of molten droplets onto the bore wall. The particles flatten when they impinge on the surface of the substrate, due to the high kinetic energy. The particles rapidly solidify upon contact. This is similar for all spraying processes.

The stacked particles make up a high wear resistant coating. The PTWA thermal spray process utilizes a single wire as the feedstock material. All conductive wires up to and including 0.0625" (1.6 mm) or larger can be used as feedstock material, including "cored" wires. PTWA can be used to apply a coating to the wear surface of engine or transmission components to replace a bushing or bearing. For example, using PTWA to coat the bearing surface of a connecting rod offers a number of benefits including reductions in weight, cost, friction potential, and stress in the connecting rod.

In one example, the first layer has a thickness in a range from 10 µm to 1000 µm, preferably in a range from 50 µm to 500 µm, more preferably in a range from 125 µm to 400 µm, even more preferably in a range from 175 µm to 375 µm, most preferably in a range from 225 µm to 325 µm, for example 250 µm.

It should be understood that the first layer comprises and/or is a porous layer, having pores therein.

In one example, the first layer is not fully consolidated (i.e. having a density less than the density of the metal), wherein the first layer comprises and/or is a porous layer, having pores therein. The presence of the pores may render the first layer pervious or semi-pervious to moisture and/or corrosive media, thereby reducing protection, for example galvanic and/or physical protection, due to the first layer of the rail.

Porosity is a normal feature of thermal spray processes. Thermal spray is a very dynamic process, involving thermal, kinetic and chemical processes. There are some special issues with porosity in thermal spray coatings. Porosity, also referred to as void fraction, is a measure of the void space (or empty space, i.e. nothing) in a material. It is typically characterized as a percentage, between 0 and 100%, of the volume of voids within the total volume. It can take on a number of forms: open, closed, interconnected, elongated, etc.

To understand the porosity associated with thermal spray processes, consider how the build is made. A coating is developed by the build-up of semi-molten spherical and irregular particles. The build can be considered to follow the same type of dynamics associated with packing of spheres in a volume. For example, assuming that the powder is spherical, of uniform size and deposited such that a simple cubic lattice is developed, the packing density for this structure is 0.524. The porosity or void fraction is therefore 0.476 or 48%. If instead of a simple cubic lattice arrangement, a hexagonal or cubic close pattern is assumed, the calculated packing density is 0.7045, giving a porosity void fraction of 0.2955 or 30%. In the study of packing of spheres in a volume, it is possible to calculate the packing density of randomly stacked spheres in a volume. In this case, the packing density is 0.640, giving a void fraction of 0.360 or 36%. Generally, anything done to the coating from this point (non-spherical particles, nonuniform size, particle compression, etc.), reduces the porosity. For example, the porosity of closely packed, circular flat disks is 9%. The upper limit for porosity or void fraction for a thermal spray build is probably around 30%.

There are some other factors regarding the porosity in thermal spray coatings.

First, unlike the porosity in products such as Swiss cheese, which is uniformly distributed throughout, no matter which way you slice it, porosity in a thermally applied coating is layered. It is a lamellar structure. Think of the cross-section of a roll of bubble wrap where you have both closed cells and connected cells. Thermal spray builds layered coatings or structures with semi-molten particles, often trapping air or process gasses between particles into both closed singular cells and connected cells. In addition, the voids can take on a number of forms including cracks.

Second, thermal spray porosity is normally measured using a destructive test. A sample or coupon is prepared using the specified spray parameters and then destroyed in the measurement. Porosity of the end product is normally not determined.

Third, while porosity is a volumetric condition, in thermal spray coatings, it is usually measured as a two-dimensional property (area porosity). In some thermal spray operations, porosity is essential. For example, the hydroxyapatite (HA) coatings used for prosthetic implants depend on the open-pore structure for attachment by bone growth. For a thermal barrier coating (TBC) used in gas turbines, some of the insulating properties are due to the porosity of the coating which runs from 7% to 15%.

On the other hand, porosity can be a problem. For example, porosity can jeopardize the structural integrity of a coating. Corrosion protection coatings can fail if the porosity allows a direct path to the substrate. Highly polished coatings such as the tungsten carbide coating of plungers used in the manufacture of bottles can lead to flaws in the finished product.

Porosity is one of the most common quantitative parameters used to characterize the microstructure of a thermally sprayed deposit. This is even though "the total porosity of the deposit does not have significant meaning from the viewpoint of quantitative interpretation of deposit properties".

The measurement of porosity is known to the skilled person. A number of means are available to measure porosity but the most popular for thermally sprayed coatings is Light Microscope Image Analysis. Besides porosity, this procedure allows for checking the thickness, interfaces, unmelted particles, any detachment and any contamination.

ASTM E2109-01 (2007), "Test Methods for Determining Area Percentage Porosity in Thermal Sprayed Coatings" covers procedures to perform porosity ratings on metallographic specimens. Specimens are prepared in accordance with ASTM E 1920.

While this is an area measurement, it is essentially equal to the porosity of the volume as long as the pores are small and uniformly distributed and/or sufficiently representative samples are obtained to avoid sampling bias, for example.

Preparation of the coupon includes sectioning, cleaning, mounting, grinding and polishing prior to microscopic inspection. Care is essential during preparation to avoid adversely influencing the results by smearing of material into voids or detaching singular particles.

Sample preparation for optical microscopy may be a destructive test and is therefore not always performed on the end product. The frequency of testing will vary according to the need. In some cases, a single qualifying sample is sufficient. In other cases, a test coupon is sprayed concurrently with each part being coated.

Porosity determination can be by comparison to standard images or by the use of automatic image analysis equipment. One automatic image analysis technique is to first develop a gray scale image of the specimen, generate a gray scale histogram of the image, establish a gray scale threshold and determine the area percentage (percentage of pixels in the image) that is less than that threshold. Additionally and/or alternatively, line fractions of polished samples may be used for point counting.

Generally, porosity determination by infiltration of coatings is not practical and/or reliable. Mercury porosimetry may be performed according to ASTM D4284 - 12(2017)e1, for example. Other methods of porosity determination of coatings are known.

Both the thermal spray process and the powder morphology can influence the porosity of the final coating structure. For example, the porosity of a coating from powder that is fused and crushed is generally lower than the porosity of a coating from powder that has been agglomerated and sintered. Also, HVOF coatings generally have a porosity that is lower than a coating produced by an electric arc process.

Post processing can also reduce coating porosity. In a sintering process, metal or ceramic particles are raised to an elevated temperature where, through diffusion driven by the reduction of surface energy, the pores reduce in size, leading to an overall decrease in porosity.

In summary, porosity is used to characterize and qualify the microstructure of thermally sprayed coatings, it can be controlled and adjusted within some limits, there are difficulties in measuring it but outside lab services are available for determination of the porosity of a coating.

In one example, the first layer has a porosity in a range from1 % to 50%, preferably in a range from 1 % to 25 %, preferably from 5 % to 20%, for example 7 % or 10 % or 15 % by volume. Porosity of the first layer may be determined as described herein.

The liquid displacement method to evaluate bulk material density (ASTM B962 and B963) can be readily adapted to thermally sprayed coatings. An alternative liquid displacement method consists of producing coatings on a thin mild steel strip, after which the steel strip is dissolved away by immersion in an acid solution. The remaining strip is used for density measurement. The strip is accurately weighed prior to being coated with a lacquer of known density, and again after coating. The coated strip is suspended in a beaker of de-mineralised and deaerated water and weighed while immersed. The coating density can then been calculated.

It is often necessary to measure the porosity levels in a coating as well as the density. A cross section of the coated test piece is prepared (mounted and polished) and observed using an optical or scanning electron microscope (SEM). Pores and oxide area are determined using an image analyser, and the level of porosity calculated as volume fractions.

The porosity level can also be determined using commercially available mercury intrusion porosimetry (MIP). The method consists of evacuating the sample and immersing in mercury at low pressure. The mercury is then pressurised; corresponding volumes of intruded mercury are measured at a series of pressures. The pore diameter can be calculated. This method enables the total porosity and pore distribution to be determined.

B962 - Standard Test Methods for Density of Compacted or Sintered Powder Metallurgy (PM) Products Using Archimedes' Principle.

B963 -Standard Test Methods for Oil Content, Oil-Impregnation Efficiency, and Surface-Connected Porosity of Sintered Powder Metallurgy (PM) Products Using Archimedes' Principle.

### Cleaning

In one example, the method comprises cleaning the at least a part of the surface of the rail before depositing the first layer thereon, for example by washing in hot water (from 70 °C to 95 °C, for example 85 °C) with a detergent and/or caustic additive and drying. In this way, the surface of the rail may be degreased.

### Roughening

In one example, the method comprises roughening the at least a part of the surface of the rail before depositing the first layer thereon, for example by blasting with suitable media such as steel grit and/or chilled iron grit, for example grit blasting such as using H grade grit, preferably after cleaning.

In one example, a surface root mean square (RMS) roughness of the surface of the rail after roughening is from 1 to 100 µm. The RMS roughness may be determined from 3D surface texture measurements, for example.

In one example, cleanliness of the surface of the rail after cleaning and/or roughening meets at least ISO 8501-1 :2007 Sa 2, preferably Sa 2.5, more preferably Sa 3.

### Providing the second layer

The method comprises providing the second layer on at least part of the first layer by applying a composition, preferably comprising a silane and/or a siloxane, in a carrier thereon and removing at least some of the carrier, thereby providing the second layer, wherein the second layer comprises and/or is a hydrophobic second layer, preferably comprising the silane and/or the siloxane.

It should be understood that the silane refers to a compound having four substituents on Si, rather than SiH₄.

Particularly, the inventors have determined that the hydrophobic second layer, overlaying the first layer, inhibits and/or prevents penetration (i.e. ingress) of moisture (for example, water) into the pores, thereby reducing corrosion of the first layer and/or of the rail.

Without wishing to be bound by any theory, it is thought that the silane and/or the siloxane undergo hydrolysis and/or condensation reactions on the surface of the metal of the first layer, for example by reacting with Zn, ZnO, Al and/or Al₂O₃, leading to the formation of the second layer having inorganic metal-siloxane bonds and an organic Si-O-Si network, thereby providing the hydrophobic second layer and better protecting the metal and/or the rail against corrosion. Particularly, it is thought that the composition penetrates into pores accessible from the outer surface of the first layer, including interconnected pores, for example by capillary action (i.e. wicking). Upon removal of the carrier, for example by evaporation, the silane and/or siloxane remains in the pores, particularly on the exposed surfaces thereof and undergo the hydrolysis and/or condensation reactions, as described above. In one example, applying the composition comprises entering, by the composition, at least some of the pores.

In one example, the composition comprises an acrylic resin, an epoxy, a urethane, a silane, a silicate, a siliconate and/or a siloxane.

Generally, silanes are saturated chemical compounds consisting of one or multiple silicon atoms linked to each other or one or multiple atoms of other chemical elements as the tetrahedral centers of multiple single bonds. By definition, cycles are excluded, so that the silanes may, for example, comprise a homologous series of inorganic compounds with the general formula SiₙH₂ₙ₊₂. Commercially available silanes are synthetically derived.

Each silicon atom has four bonds (either Si-H or Si-Si bonds), and each hydrogen atom is joined to a silicon atom (H-Si bonds). A series of linked silicon atoms is known as the silicon skeleton or silicon backbone. The number of silicon atoms is used to define the size of the silane (e.g., Si₂-silane).

Related to silanes, for example, is a homologous series of functional groups, side-chains or radicals with the general formula SiₙH₂ₙ₊₂. Examples include silyl and disilanyl.

The simplest possible silane (the parent molecule) is silane, SiH₄. There is no limit to the number of silicon atoms that can be linked together, the only limitation being that the molecule is acyclic, is saturated, and is a hydrosilicon.

In one example, the silane is a linear or a branched silane.

In one example, the silane is a triethoxysilane, for example selected from a group comprising triethoxy(octyl)silane (TEOS) (also known as Octyltriethoxysilane (OTES)), 3-aminopropyltriethoxysilane and triethoxy(2,4,4-trimethylpentyl)silane. TEOS is especially preferred, preferably in an aqueous carrier.

In one example, the silane is R¹Si(OR²)₃ wherein R¹ is a lower alkyl group, a phenyl group or an N-(2-aminoethyl)-3-aminopropyl group, and R² is a lower alkyl group.

In one example, the silane is R¹ₙSi(OR²)₄₋ₙ where R¹ is a lower alkyl group, phenyl group, 3,3,3-trifluoropropyl group, γ-glycidyloxypropyl, γ-methacryloxypropyl group, N-(2-aminoethyl)-3-aminopropyl group or aminopropyl group, R² is a lower alkyl group; and n is a number of 1 or 2.

In one example, the silane is R¹Si(OR²)₃ wherein R² is a lower alkyl group, a phenyl group or a functional group, including at least one of vinyl, acrylic, amino, mercapto, or vinyl chloride functional group; and R² is a lower alkyl group. As examples of silanes of formula R¹Si(OR²)₃ wherein R¹ is an alkyl group or aryl group, mention may be made of, for example, methyltrimethoxysilane, ethyltrimethoxysilane, ethyltriethoxysilane, n-propyltrimethoxysilane, n-propyltriethoxysilane, isopropyltrimethoxy silane, n-butyltrimethoxy silane, isobutyltrimethoxy silane, phenyltrimethoxy silane, preferably methyltrimethoxy silane. In the case where R1 is a functional group, mention may be made, for example, of N-(2-aminoethyl)-3-aminopropyltrimethoxy silane, 3-mercaptopropyltrimethoxy silane, 3-mercaptopropyltriethoxy silane, 3-aminopropyltriethoxy silane, 3-(meth)acryloxypropyl trimethoxy silane, 3-(meth)acryloxypropyltriethoxy silane, n-phenylaminopropyltrimethoxy silane, vinyltriethyoxy silane, vinyltrimethoxy silane, allyltrimethoxy silane, and any of the aminosilane catalysts.

As used herein, the expression "functional group" is intended to include any group, other than hydroxyl, (including alkoxy, aryloxy, etc.), which is hydrolyzable to provide, in situ, a reactive group (e.g., reactive hydrogen) which will react, in other than a condensation reaction, with the substrate (e.g., metal), itself, or other reactive components in or from the coating composition.

The functional groups, in addition to the hydroxyl group (by hydrolysis of the (OR²) groups), tend to form three-dimensional or cross-linked structure, as well known in the art.

Moreover, in the various embodiments of the invention, it is may be preferred to use mixtures of two or more silane compounds of formula R¹Si(OR²)₃. Mixtures of at least phenyltrimethoxysilane and methyltrimethoxysilane may be preferred for some applications.

Generally, total amounts of silane compounds of formula R¹Si(OR²)₃ will fall within the range of from about 40 to about 90 percent by weight, preferably from about 50 to about 85 percent by weight, based on the total weight of silanes, acid component and water.

Generally, a siloxane is a functional group in organosilicon chemistry with the Si-O-Si linkage. The parent siloxanes include the oligomeric and polymeric hydrides with the formulae H(OSiH₂)ₙOH and (OSiH₂)ₙ. Siloxanes also include branched compounds, the defining feature of which is that each pair of silicon centres is separated by one oxygen atom. The siloxane functional group forms the backbone of silicones, the premier example of which is polydimethylsiloxane. The functional group R₃SiO- (where the three Rs may be different) is called siloxy.

In one example, the siloxane has the formula 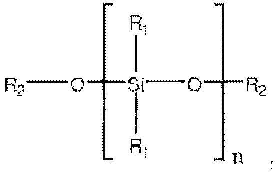 (i.e. a polysiloxane) wherein each R₁ is selected from a hydroxy group or alkyl, aryl, or alkoxy groups having up to six carbon atoms, each R₂ is selected from hydrogen or alkyl or aryl groups having up to six carbon atoms, and where n is selected so that the molecular weight for the polysiloxane is in the range of 400 to 10,000.

In one example, the composition comprises more than one silane and/or more than one siloxane.

Generally, the silane is the smallest molecular compound of commonly available penetrating sealers for concrete. In contrast, the siloxane is the largest molecular compound of commonly available penetrating sealers for concrete. Surprisingly, the inventors have identified that penetrating sealers for concrete may be effective as the composition.

In one example, the composition comprises and/or is Rust-oleum (RTM) PREVOSIL SPECIAAL WB (i.e. a water based, WB, composition) (available from Rust-oleum Industrial, IL, USA) and/or ProPERLA (RTM) Water Repellent (available from ProPERLA UK Ltd), Stone Sealer LTP (available from https://www.ltp-online.co.uk/).

Section 3 of the Safety Data Sheet for Rust-oleum (RTM) PREVOSIL SPECIAAL WB (available from https://www.prochemko.eu/static/safetysheet msds prevosil wb en.pdf; version 2.02; Date of issue/Date of revision 20/10/2017) states:

| **SECTION 3: Composition/information on ingredients** | | | | |
|---|---|---|---|---|
| **3.2 Mixtures** | : Mixture | | | |
| **Product/ingredient name** | **Identifiers** | **%** | **Classification** | **Type** |
| | | | **Regulation (EC) No. 1272/2008 [CLP]** | |
| triethoxyoctylsilane | EC: 220-941-2 | ≤3 | Skin Irrit. 2, H315 | [1] |
| | CAS: 2943-75-1 | | **See Section 16 for the full text of the H statements declared above.** | |

| | | | | |
|---|---|---|---|---|
| There are no additional ingredients present which, within the current knowledge of the supplier and in the concentrations applicable, are classified as hazardous to health or the environment, are PBTs, vPvBs or Substances of equivalent concern, or have been assigned a workplace exposure limit and hence require reporting in this section. Type [1] Substance classified with a health or environmental hazard [2] Substance with a workplace exposure limit [3] Substance meets the criteria for PBT according to Regulation (EC) No. 1907/2006, Annex XIII [4] Substance meets the criteria for vPvB according to Regulation (EC) No. 1907/2006, Annex XIII [5] Substance of equivalent concern Occupational exposure limits, if available, are listed in Section 8. | | | | |

The Safety Data Sheet for ProPERLA (RTM) Masonry Crème (related to Water Repellent) (available from https://www.google.com/url?sa=t&rct=j&q=&esrc=s&source=web&cd=1&cad=rja&uact=8&ved =2ahUKEwijttOpio7oAhVTfMAKHcsgB3sQFjAAegQIBBAB&url=https%3A%2F%2Fwww.prope rla.co.uk%2Fwp-content%2Fuploads%2F2017%2F06%2FMasonry-Creme-Safety-sheet.pdf&usg=AOvVaw0MCz6h7R0U62jgJn-leYnN; version : 1; Date of print : 24.02.2014), states:

### Safety Data Sheet (1907/2006/EC)

### Material: PROPERLA - Masonry Creme Version: 1 Date of print: 24.02.2014

| EC-No. | CAS No. | Material | Content % | | Warning Label (EC) | |
|---|---|---|---|---|---|---|
| | | | from | to | Symbol | R-Phrases |
| 265-149-8 | 64742-47-8 | mixture of aliphatic hydrocarbons | >50,0 | | Xn | 65-66 |
| 252-558-1 | 35435-21-3 | Triethoxy(2,4,4-trimethylpentyl)silane | | <15,0 | | 10-52/53 |

In one example, a viscosity of the composition is sufficiently low to enable entrance of the composition into the pores.

In one example, the second layer has a thickness in a range from 1 to 250 nm, preferably 5 to 125 nm, more preferably in a range from 10 to 50 nm.

In one example, providing the second layer on at least part of the first layer by applying the composition comprises infusing, permeating, impregnating, soaking and/or saturating the composition into the at least part of the first layer, for example by misting, spraying, painting and/or immersing the at least part of the first layer with the composition. In one example, providing the second layer on at least part of the first layer by applying the composition comprises penetrating the composition through at least part of the first layer towards the surface of the rail, preferably to the interface between the first layer and the rail (i.e. the surface thereof).

In one example, the composition comprises an acrylic resin, an epoxy, a urethane, a silane, a silicate, a siliconate and/or a siloxane, preferably a silane and/or a siloxane, in the carrier in an amount in a range from 0.5 wt.% to 50 wt.%, preferably in a range from 0.75 wt.% to 25 wt.%, more preferably in a range from 1.0 wt.% to 15 wt.%, most preferably in a range from 1.5 wt.% to 7.5 wt.% by mass of the composition.

In one example, applying the composition comprises misting, spraying, painting and/or immersing the at least part of the first layer with the composition, for example at a coverage (by area of the rail) from 50 ml m⁻² to 500 ml m⁻², preferably from 100 ml m⁻² to 300 ml m⁻², more preferably from 150 ml m⁻² to 250 ml m⁻², for example 200 ml m⁻² and optionally, allowing the composition to penetrate into the first layer.

In one example, the carrier comprises and/or is an aqueous carrier (i.e. water). In one example, the carrier comprises and/or is an organic carrier.

In one example, the composition comprises and/or is a solution, an emulsion and/or a dispersion, preferably an aqueous solution.

Aqueous carriers and/or aqueous solutions (i.e. water based) are preferred. Particularly, applying the composition proximal a thermal sprayer, for example, precludes and/or complicates use of compositions including flammable carriers.

In one example, removing at least some of the carrier is by evaporation of the carrier. In one example, removing at least some of the carrier comprises heating the second layer, for example using radiant lamps. In this way, removing of the carrier may be accelerated and/or an increased amount of the carrier removed.

In one example, the method comprises providing the second layer on at least part of the first layer comprises providing the second layer on at least part of the newly-deposited first layer. In this way, the second layer is provided on the newly-deposited first layer (i.e. immediately after, within 60 minutes, preferably within 30 minutes, more preferably within 15 minutes of depositing the first layer), before contamination thereof and/or moisture penetration therein.

In one example, the second layer overlays at least a part of the surface of the pores in the first layer.

In one example, the second layer at least partially fills the pores in the first layer.

In one example, the silane is a triethoxysilane, for example selected from a group comprising triethoxy(octyl)silane, 3-aminopropyltriethoxysilane and triethoxy(2,4,4-trimethylpentyl)silane.

In one example, the second layer has a thickness in a range from 1 to 250 nm, preferably 5 to 125 nm, more preferably in a range from 10 to 50 nm.

In one example, the metal consists of from 5 wt.% to 25 wt.% Al, optionally from 0 to 10 wt.% Mg, optionally from 0 to 5 wt.% Cu, optionally from 0 to 5 wt.% Ag, balance Zn and unavoidable impurities.

In one example, the first layer consists of from 5 wt.% to 25 wt.% Al, optionally from 0 to 10 wt.% Mg, optionally from 0 to 5 wt.% Cu, optionally from 0 to 5 wt.% Ag, balance Zn and unavoidable impurities.

In one example, the first layer has a thickness in a range from 10 µm to 1000 µm, preferably in a range from 50 µm to 500 µm, more preferably in a range from 125 µm to 400 µm, most preferably in a range from 225 µm to 325 µm, for example 250 µm.

The adherence of a coating to a rail may be measured according to ASTM D4541 - 09 Standard Test Method for Pull-Off Strength of Coatings Using Portable Adhesion Testers or ASTM D4541 - 17 Standard Test Method for Pull-Off Strength of Coatings Using Portable Adhesion Testers.

Suitably the adherence of the coating as measured according to ASTM D4541, as described above, is increased by at least 5%, suitably at least 10%, preferably at least 15%, for example at least 20% compared with a coating not including the second layer. The increased adherence of the coating to the rail reduces the likelihood that the coating will be chipped or cracked during transport and installation. Therefore, the coating is more likely to be maintained for longer before breaching. As a result, there is a reduced likelihood of corrosion or failure of the steel. Suitably the adherence of the coating as measured according to ASTM D4541, as described above, is in a range from 3 to 30 MPa, in a range from 4 to 29 MPa, in a range from 5 to 28 MPa, in a range from 6 to 26 MPa, preferably in a range from 7 to 20 MPa. The increased adherence of the coating to the rail in this range reduces the likelihood that the coating will be chipped or cracked during transport and installation, as described above, while also permitting deliberate removal of the coating if desired, for example for preparation for welding, particularly in situ welding of installed rails. Some conventional coatings may require chemical removal such that preparation for in situ welding of installed rails is not possible and/or complex. Hence, by providing the increased adherence of the coating to the rail in this range improves protection of the rail due to the coating while facilitating joining and/or repair, if required.

The present invention may also provide one or more further benefits for example improved abrasion resistance, increased impact resistance, improved wear resistance, improved stray current resistance and/or improved prohesion performance compared with conventional coatings.

### Track circuits

Generally, a track circuit is an electrical device used to prove the absence of a train on rail tracks to signallers and control relevant signals.

The basic principle behind the track circuit lies in the connection of the two rails by the wheels and axle of locomotives and rolling stock to short an electrical circuit. This circuit is monitored by electrical equipment to detect the absence of the trains. Since this is a safety appliance, fail-safe operation is crucial. Hence the circuit is designed to indicate the presence of a train when failures occur. On the other hand, false occupancy readings are disruptive to railway operations and must be minimized.

Track circuits allow railway signalling systems to operate semi-automatically, by displaying signals for trains to slow or stop in the presence of occupied track ahead of them. Track circuits help prevent dispatchers and operators from causing accidents, both by informing them of track occupancy and by preventing signals from displaying unsafe indications.

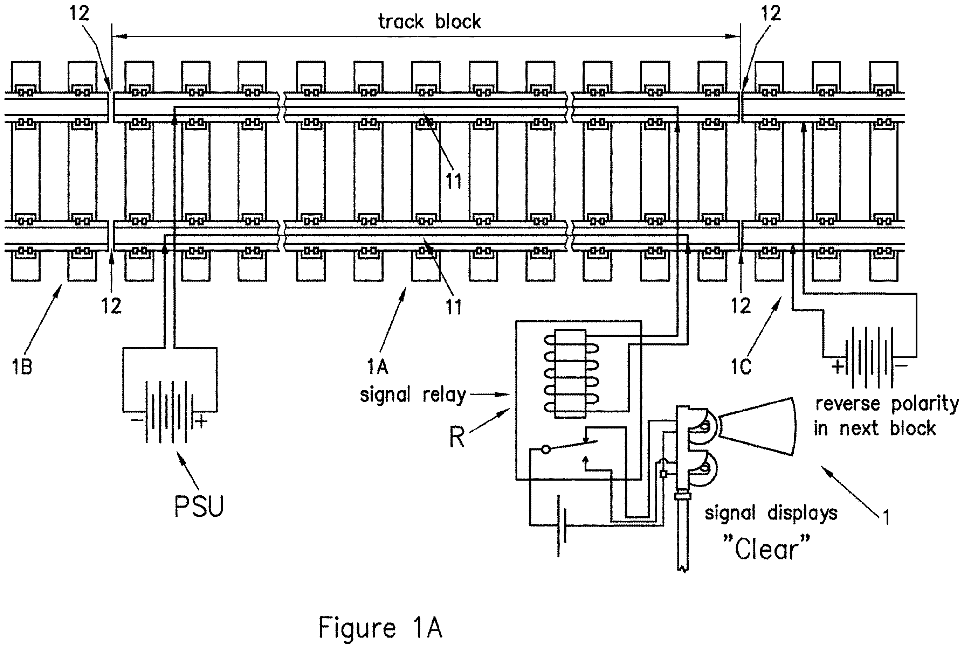

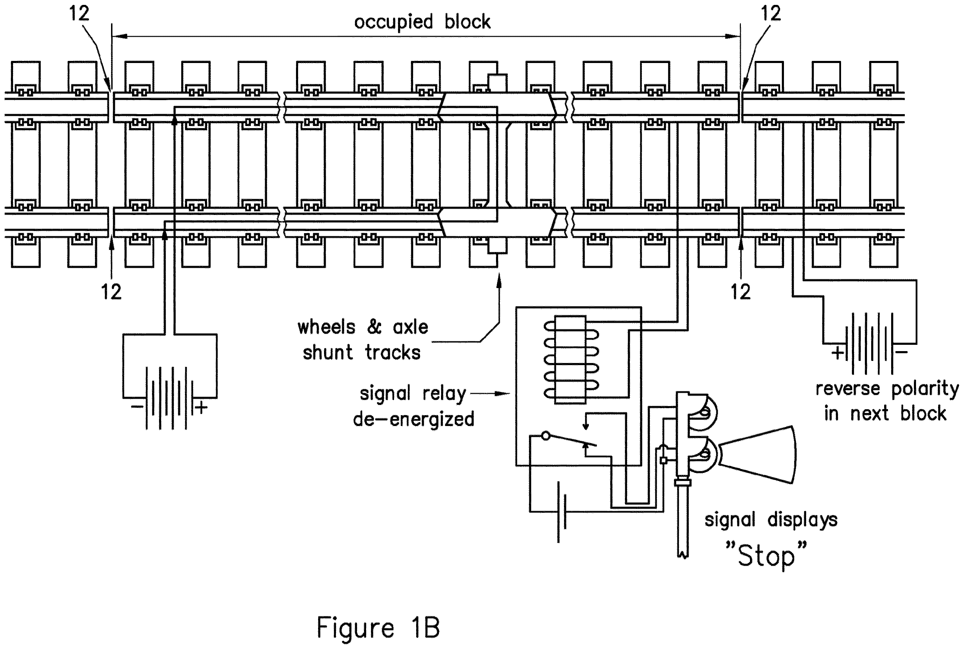

A basic track circuit typically has power applied to each rail and a relay coil wired across them. When no train is present, the relay is energised by the current flowing from the power source through the rails (Figure 1A). When a train is present, its axles short (shunt) the rails together (Figure 1B). The current to the track relay coil drops, and it is de-energised. Circuits through the relay contacts therefore report whether or not the track is occupied.

Each circuit detects a defined section of track, such as a block. These sections are separated by insulated joints, usually in both rails. To prevent one circuit from falsely powering another in the event of insulation failure, the electrical polarity is usually reversed from one section to an adjacent section. Circuits are powered at low voltages (1.5 to 12 V DC). The relays and the power supply are attached to opposite ends of the section to prevent broken rails from electrically isolating part of the track from the circuit. A series resistor limits the current when the track circuit is short-circuited.

In some railway electrification schemes, one or both of the running rails are used to carry the return traction current. This precludes use of the basic DC track circuit because the substantial traction currents overwhelm the very small track circuit currents.

Where DC traction is used on the running line or on tracks in close proximity then DC track circuits cannot be used; similarly if 50 Hz AC electrification is used then 50 Hz AC track circuits cannot be used.

To accommodate this, AC track circuits use alternating current (AC) signals instead of direct current (DC) but typically, the AC frequency is in the range of audio frequencies, from 91 Hz up to 10 kHz. The relays are arranged to detect the selected frequency and to ignore DC and AC traction frequency signals. Again, fail-safe principles dictate that the relay interprets the presence of the signal as unoccupied track, whereas a lack of a signal indicates the presence of a train. The AC signal can be coded and locomotives equipped with inductive pickups to create a cab signalling system.

There are two common approaches to provide a path for traction current that spans multiple track circuit blocks. The simplest method installs insulated track circuit joints on only one of the two rails with the second being a path for the return current and a ground for the track circuit rail. This has the disadvantage of only being able to detect breaks in one rail so the more popular two rail system uses impedance bonds to permit traction current to pass between isolated track circuit blocks while blocking current at track circuit frequencies.

AC circuits are sometimes used in areas where conditions introduce stray currents, which interfere with DC track circuits.

### Jointless track circuits

Modern track is often continuously welded, the joints being welded during installation. This offers many benefits, except to the signalling system, which no longer has natural breaks in the rail to form block sections. The only method to form discrete blocks in this scenario is to use different audio frequencies (AF) in each block section. To prevent the audio signal from one section passing into an adjacent section, pairs of tuned circuits are connected across the rails at the section boundary. The tuned circuit often incorporates the circuit to either apply the transmitted signal to the track or recover the received signal from the other end of the section.

### Advantages of jointless track circuits:

- Eliminates insulated rail joints, a component liable to mechanical failure (both of insulation and by introducing stress to adjoining rails) and maintenance.
- In electrified areas, jointless track circuits require fewer impedance bonds than any other double rail traction return track circuits.

### Disadvantages of jointless track circuits:

- Restrictions on placing impedance bonds, hence any connection for electrification purposes, in or near tuned zones as this may upset the filter properties of the tuned zone.
- Electronic circuits are more vulnerable to lightning strikes.

### CSEE UM71

CSEE (now Ansaldo STS) UM71 is another kind of jointless track circuit. It uses 1700 Hz and 2300 Hz on one track and 2000 Hz and 2600 Hz on the other.[1] To reduce the chance of stray currents causing a wrong side failure the modulation frequency is calculated by dividing the base frequency by 128. Different rates of modulation can be detected by equipment on the trains and used for ATC, so long as the transmitter end (Tx) is at the front of the train.

The EBltrack (formerly TI21) and Westinghouse FS2500 jointless track circuits are similar to the UM71.

### Data pickup unit

A jointless track circuit such as the CSEE can be divided with a data pickup unit (DPU), which is cheaper than splitting it into two track circuits. A DPU avoids the need to change the frequency of a whole series of track circuits in a cascade. The DPU consists of a tuned coil which detects the presence or absence of current in the adjacent rail and picks up or drops a relay accordingly. One use of DPUs is for timing circuits. Each track circuit frequency has its own DPU tuned to that frequency. DPUs can be located almost anywhere; they overcome the limitation that jointless tracks have a minimum length.

### DC coded track circuits

In non-electrified areas, DC coded track circuits may be used. These modulate the current going from the power source end to the relay end and control the signals and cab signals without the need for line wires. The modulated currents can be detected by equipment connected to the track to provide signalling and indication information to activate proper cab signalling if available. They can be overlain by predictor systems to operate level crossings.

### Cut tracks

Where the length of a section exceeds the practical length of a track circuit, cut tracks can be provided. With a cut track, the relay of the last track cuts the power source feed of the second last track circuit, and so on. Cut tracks are only suitable for unidirectional tracks.

Track circuits with ballast contamination will be shorter than those with good ballast, thus needing more cut tracks.

### High voltage tracks

One common brand of high voltage impulse track (HVIT) circuit is made by Jeumont-Schneider. The high voltage penetrates rust and other problems.

The HVIT transmits two pulses alternately, a narrow positive one at about 100VDC and a negative broader one at about 30VDC. The energy of the two pulses is the same. At the receiver end a R-C circuit integrates the two pulses which must be of the correct proportions for the relay to pick up. The R-C circuits check that the positive and negative pulses are in correct phase. The two pulses operate at about 1 Hz.

The circuit will operate on AC and DC electrified lines, with additional equipment.

### Single rail and double rail

In non-electrified areas, insulated block joints come in pairs, one on each rail.

In electrified areas, a workaround is needed to allow the traction current, of the order of thousands of amps, to return to the substation. This may be achieved by having no insulated rail joints in one of the rails, called the return rail.

If both rails are needed to carry the heavy traction return current, then insulated rail joints are provided in both rails, and impedance bonds are provided to carry the traction current around the insulated joints. Impedance bonds are essentially centre-tapped coils, which offer low impedance to traction current at say 50 Hz, while offering high impedance to signalling current at say 1.7 kHz.

### Railway electrification systems

Generally, railway electrification systems are known and may be classified by three main parameters:
1. Voltage
2. Current
   Direct current (DC)
   Alternating current (AC)
      Frequency
3. Contact system
   Overhead lines (catenary)
   Third rail
   Fourth rail
   Ground-level power supply

### Railway track

The third aspect provides a railway track comprising a track circuit or a railway electrification system according to the second aspect.

In one example, the railway track comprises a level crossing or a tunnel, wherein the second rail of the first jointed track spans the level crossing or a part, for example an entrance or exit, of the tunnel.

In one example, the second rail of the first jointed track spans beyond the level crossing or a part of the tunnel.

### Kit of parts

The fourth aspect provides a kit of parts for a jointed track for a track circuit or a railway electrification system, comprising:
a set of rails including a first rail, a second rail and a third rail;
optionally, a set of insulated rail joints, IRJs, including a first IRJ, for mutually joining serially end-to-end the first rail and the second rail and optionally, a second IRJ, for mutually joining serially end-to-end the second rail and the third rail; and
optionally, a first electrical coupling for mutually electrically coupling the first rail and the third rail.

The jointed track, the track circuit, the railway electrification system, the set of rails including the first rail, the second rail and the third rail, the set of insulated rail joints, IRJs, including the first IRJ, the second IRJ and/or the first electrical coupling may be as described with respect to the first aspect. The kit of parts may include any part as described with respect to the first aspect.

### Method

The fifth aspect provides a method of inhibiting stray current corrosion of a track circuit or a railway electrification system at a level crossing or a tunnel, the method comprising:
providing a first rail, a second rail and a third rail;
spanning the level crossing or a part of the tunnel with the second rail;
joining serially end-end the first rail, the second rail and the third rail, comprising mutually electrically isolating the first rail and the second rail and mutually electrically isolating the second rail and the third rail; and
mutually electrically coupling the first rail and the third rail.

The jointed track, the track circuit, the railway electrification system, the set of rails including the first rail, the second rail and the third rail, the set of insulated rail joints, IRJs, including the first IRJ, the second IRJ and/or the first electrical coupling may be as described with respect to the first aspect. The method may include any step as described with respect to the first aspect.

### Coated rail

The sixth aspect provides a coated rail having bolt holes for an insulated rail joint, IRJ, at one or both ends, optionally wherein the rail has a length of at most 18 m.

The coated rail may be as described with respect to the second rail of the first aspect mutatis mutandis.

In one example, the rail has a length of at most 18 m, preferably at most 15 m, more preferably at most 12 m. In one example, the rail has a length in a range from 6 m to 18 m, preferably in a range from 9 m to 15 m.

### Definitions

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

### Brief description of the drawings

For a better understanding of the invention, and to show how exemplary embodiments of the same may be brought into effect, reference will be made, by way of example only, to the accompanying diagrammatic Figures, in which:
Figures 1A and 1B schematically depict a conventional track circuit;
Figures 2A and 2B schematically depict a jointed track according to an exemplary embodiment;
Figure 3 is a photograph of a two cell configuration;
Figure 4 is a photograph of a one cell configuration;
Figure 5 shows a Two cell Zinoco rail wiring diagram and configuration assembly (Test Set up One);
Figure 6 shows a two cell standard rail wiring diagram configuration assembly (Test Set up Two);
Figure 7 shows a two cell standard rail wiring diagram configuration assembly (Cell across shunt contains dry sand only) (Test Set up Three);

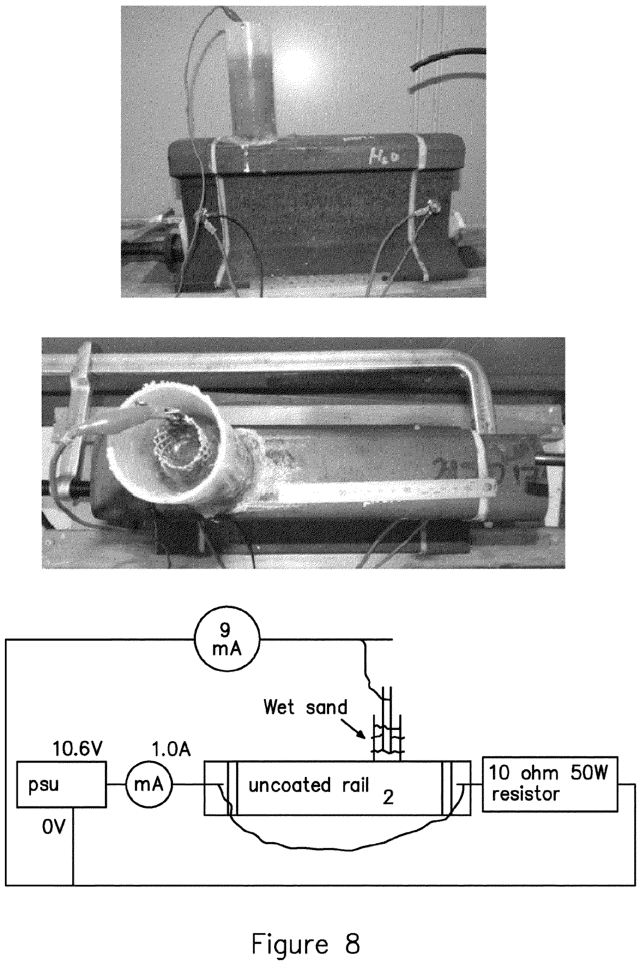

Figure 8 shows a one cell standard rail wiring diagram configuration assembly (Test Set up Four);
Figure 9 schematically depicts a mechanism of corrosion;
Figure 10 schematically depicts a corrosion cell;
Figure 11A and 11B are photographs of two cell Zinoco^{®} rail configuration assembly - Test Set up One (Figure 11A: Cell positioned on main body of rail; Figure 11B: Cell positioned across shunt);
Figure 12A and 12B are photographs of two cell dry standard rail configuration assembly - Test Set up Two (Figure 12A: Cell positioned on main body of rail; Figure 12B: Cell positioned across shunt);
Figure 13A and 13B are photographs of two cell dry standard rail configuration assembly - Test Set up Three (Figure 13A: Cell positioned on main body of rail; Figure 13B: Cell positioned across shunt);
Figure 14 is a photograph of one cell standard rail configuration assembly - Test Set up Four;
Figure 15 schematically depicts a method according to an exemplary embodiment.

### Detailed Description of the Drawings

Like reference signs denote like features.

Figure 1A and 1B schematically depicts a conventional track circuit 1A.

The track circuit 1A typically has power applied to each rail 11 and a relay coil R wired across them. When no train is present, the relay R is energised by the current flowing from the power source PSU through the rails (Figure 1A). When a train is present, its axles short (shunt) the rails 11 together (Figure 1B). The current to the relay coil R drops, and it is de-energised. Circuits through the relay contacts therefore report whether or not the track is occupied.

Each circuit 1A, 1B, 1C detects a defined section of track, such as a block. These sections are separated by insulated rail joints 12, usually in both rails 11. To prevent one circuit from falsely powering another in the event of insulation failure, the electrical polarity is usually reversed from one section to an adjacent section. Circuits are powered at low voltages (1.5 to 12 V DC). The relays and the power supply are attached to opposite ends of the section to prevent broken rails from electrically isolating part of the track from the circuit. A series resistor limits the current when the track circuit is short-circuited.

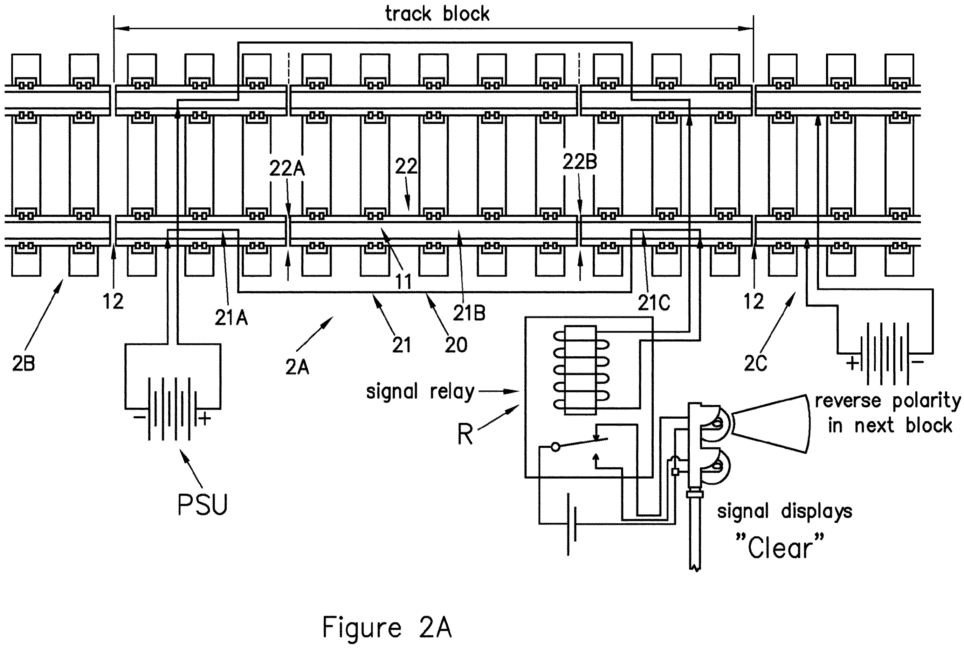

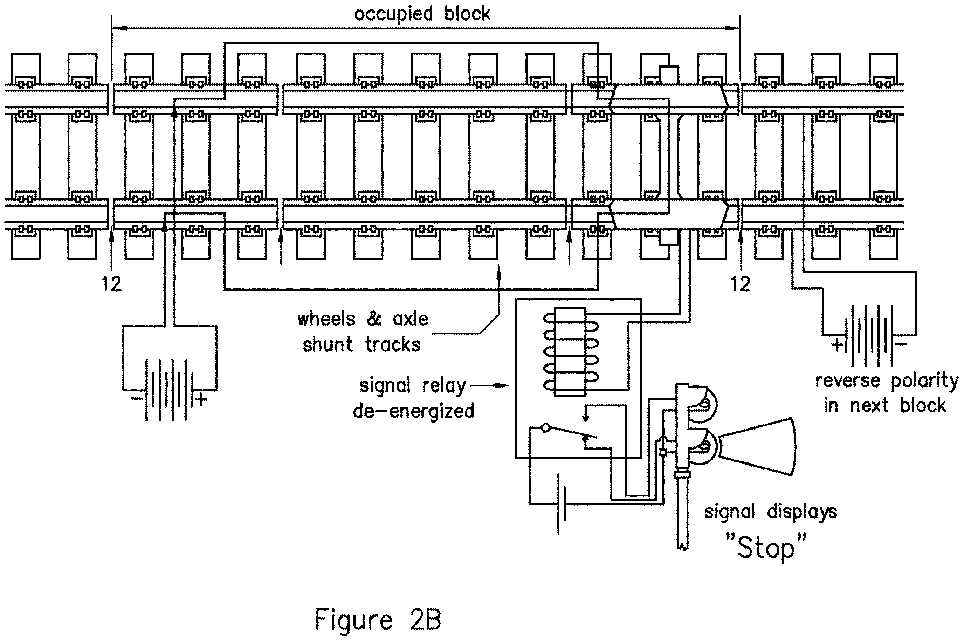

Figures 2A and 2B schematically depict a jointed track 20 according to an exemplary embodiment.

The first aspect provides a jointed track 20 for a track circuit 2A or a railway electrification system 2B (not shown), the jointed track 20 comprising:
a series of rails 21, including a first rail 21A, a second rail 21B and a third rail 21C, jointed serially end-to-end to provide a running surface;
wherein the first rail 21A and the second rail 21B are mutually electrically isolated;
wherein the second rail 21B and the third rail 21C are mutually electrically isolated; and
wherein the first rail 21A and the third rail 21C are mutually electrically coupled.

The jointed track 20 is for (i.e. suitable for) a track circuit 2A or a railway electrification system 2B. The jointed track 20 may be suitable for other applications, for example wherein current flows through the first rail 21A and the second rail 21B.

In this example, the series of rails 21 includes 3 rails.

The series of rails 21 is jointed serially end-to-end to provide a running surface, for example for a wheel of a train. In this example, the first rail 21A has a first end and an opposed second end, the second rail 21B has a first end and an opposed second end and the third rail 21C has a first end and an opposed second end, wherein the first end of the first rail 21A and the first end of the second rail 21B are mutually jointed and wherein the second end of the second rail 21B and the second end of the third rail 21C are mutually jointed.

The first rail 21A and the second rail 21B are mutually electrically isolated, for example using an insulated rail joint, as described below. In this example, an electrical resistance between the first rail 21A and the second rail 21B is at least 5 MΩ, preferably at least 10 MΩ, more preferably at least 20 MΩ, most preferably at least 25 MΩ. In this example, an electrical resistance between the first rail 21A and the second rail 21B is in a range from 5 MΩ to 250 MΩ, preferably in a range from 10 MΩ to 200 MΩ, more preferably in a range from 20 MΩ to 150 MΩ, most preferably in a range from 25 MΩ to 100 MΩ.

The second rail 21B and the third rail 21C are mutually electrically isolated, for example using an insulated rail joint, as described below. In this example, an electrical resistance between the second rail 21B and the third rail 21C is at least 5 MΩ, preferably at least 10 MΩ, more preferably at least 20 MΩ, most preferably at least 25 MΩ. In this example, an electrical resistance between the second rail 21B and the third rail 21C is in a range from 5 MΩ to 250 MΩ, preferably in a range from 10 MΩ to 200 MΩ, more preferably in a range from 20 MΩ to 150 MΩ, most preferably in a range from 25 MΩ to 100 MΩ.

In this example, the jointed track 20 comprises a set of insulated rail joints, IRJs, 22 including a first IRJ 22A;
wherein the first rail 21A and the second rail 21B are mutually jointed serially end-to-end by the first IRJ 22A.

In this example, the first IRJ 22A comprises and/or is an insulated block joint, IBJ, for example as described previously.

In this example, the first IRJ 22A comprises a first electrical insulator, for example a polymeric plate such as comprising nylon, perspex and/or polyurethane, disposed between respective ends of the first rail 21A and the second rail 21B. In this way, mutual electrical isolation is provided, at least in part, by the first electrical insulator.

In this example, the set of IRJs includes a second IRJ 22B;
wherein the second rail 21B and the third rail 21C are mutually jointed serially end-to-end by the second IRJ 22B. The second IRJ 22B may be as described with respect to the first IRJ 22A.

The first rail 21A and the third rail 21C are mutually electrically coupled, for example using a cable. In this example, an electrical resistance between the first rail 21A and the third rail 21C is at most 1 kΩ, preferably at most 100 Ω, more preferably at most 10 Ω, most preferably at most 5 Ω. In this example, an electrical resistance between the first rail 21A and the third rail 21C is in a range from 5 Ω to 1 kΩ, preferably in a range from 100 Ω to 500 Ω, more preferably in a range from 10 Ω to 100 Ω, most preferably in a range from 5 Ω to 50 Ω.

In this example, the jointed track 20 comprises a first electrical coupling 23, for example a cable;
wherein the first rail 21A and the third rail 21C are mutually electrically coupled via the first electrical coupling 23.

In this example, a length of the first rail 21A and/or a length of the third rail 21C is less than a length of the second rail 21B. That is, the second rail 21B is relatively longer than the first rail 21A and/or the third rail 21C. For example, the first rail 21A may have a length of 9 m, the second rail 21B may have a length of 18 m for spanning a level crossing and the third rail 21C may have a length of 9 m, providing a total length of 36 m.

In this example, the jointed track 20 has a length in a range from 6 m to 360 m, for example from 15 m to 250 m, preferably in a relatively shorter range from about 15 m to about 60 m for example about 18 m, about 36 m, about 50 m or about 60 m, and/or preferably in a relatively longer range from 60 m to 150 m, more preferably in a range from 90 m to 130 m, for example 108 m or 120 m.

In this example, a length of the second rail 21B is in a range from 4 m to 40 m, preferably in a range from 7 m to 20 m, more preferably in a range from 10 m to 15 m. In this way, the second rail 21B may span a level crossing, for example. For reference, a typical single carriage way has a standard width of 3.65 m in the UK. In this example, a joint between the first rail 21A and the second rail 21B is in a range from 1 m to 5 m, preferably in a range from 2 m to 4 m, for example 3 m or about 3 m, from, for example, a level crossing or tunnel entrance, whereby the joint is disposed on ballast (i.e. well-drained). A joint between the second rail 21B and the third rail 21C may be as described with respect to a joint between the first rail 21A and the second rail 21B mutatis mutandis.

In this example, the second rail 21B comprises and/or is coated rail, as described below in more detail. In this way, corrosion protection of the second rail 21B is improved. In this example, the second rail 21B is disposed at most partly on ballast or equivalent (i.e. poorly-drained). In this example, the second rail 21B is not disposed on ballast or equivalent (i.e. poorly-drained).

In this example, the second rail 21B comprises and/or is an unjointed rail or a continuously welded rail, CWR. In one preferred example, the second rail 21B comprises and/or is an unjointed rail, for example a single length spanning a level crossing.

In this example, the first rail 21A and/or the third rail 21C comprises and/or is an uncoated rail.

In this example, the first rail 21A and/or the third rail 21C comprises and/or is a jointed rail, an unjointed rail or a continuously welded rail, CWR.

### Experimental

The experiments demonstrate the inhibition of stray current corrosion for a track circuit or a railway electrification system, according to exemplary embodiments.

### 1. Introduction

Zinoco^{®} is a zinc rich metal alloy applied by twin arc thermal metal spray and was designed to offer improved corrosion, impact, and abrasion resistance when compared to traditional rail coatings in severe service environments.

Stray current corrosion is a method of corrosion that occurs in electrified rail systems. The voltage in the return rail can lead to a leakage current path to earth which will accelerate surface corrosion reactions. British Steel Research and Development assembled a bespoke test to assess the suitability of the use of a shunt to further reduce the passage of the current leakage. Different coatings have been developed with improved stray current corrosion performance, rails with zinc rich coatings have been demonstrated to perform well in stray current corrosion conditions. Zinoco is a zinc-rich coating.

### 2. Sample Preparation

Four different testing conditions were assembled, 3 incorporating two cells with the remaining set up to simulate rain fall and requiring one cell only. The testing conditions are shown in Table 1.

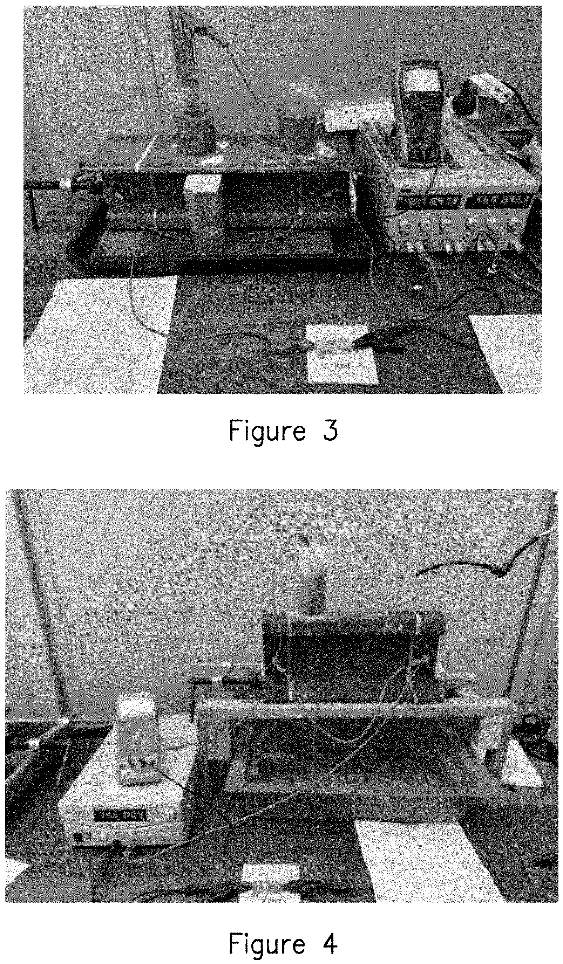

An example of the two cell configuration is shown in Figure 3 with the one cell configuration in Figure 4.

**Table 1: Test Conditions**

| Test Set Up: | Description |
|---|---|
| 1 | Zinoco^{®} shunt assembly as in Figure 3. |
| | Cells contain sand and electrolyte solution. |
| 2 | Standard Rail shunt assembly as in Figure 3. |
| | Cells contain sand and electrolyte solution. |
| 3 | Standard Rail shunt assembly as in Figure 3. |
| | Cell across insulating spacer contains dry sand only. |
| 4 | Standard Rail assembled as in Figure 4. |

### Sample Assembly

One 8mm hole was drilled into the two end sections of the sample assembly in the centre of the web, a M8 nut and bolt was fitted to allow connection of the circuit wires.

The largest rail component of the sample assembly was placed within the centre with an insulating spacer at either side followed by the shorter rail section. The rail assembly was then clamped together and chocked to prevent assembly topping over while testing for the two cell configuration as shown in Figures 3 and 4.

The cells are to be attached to the substance with silicone sealer and left to dry for 24 hours. A 20 mm layer of builder's sand is placed within each cell with the platinum plated electrode placed on top of this layer in the centre of the cell. Additional builder's sand is added up to 70 mm line on the cell.

Where electrolyte is required to be added to the cell. The electrolyte is added to the cell up to a level of 10 mm above the sand. The electrolyte solution is made up of 1gram of sodium chloride to 99 ml of deionized water accordantly.

### Equipment List

PSU
Multimeter
1mm² diameter.
Croc Clips / 4mm plugs
10 ohm 50 W Resistor
M8 Nuts & Bolts.
Perspex Corrosion cells.
Silicone Sealer
Platinum electrodes

### Sample Set up: Figure 3

Two Perspex corrosion cells are attached to the sample.

One cell was attached to the main body of the central rail sample as close as practical to the spacer, the second cell was attached across the two rail samples separated by the spacer at the opposite area of the sample set up.

### Sample Set up: Figure 4

One cell was attached to the main body of the central rail sample on the running surface as close as practical to the spacer.

Rainwater was poured into the delivery bottle on the right side on the photograph in Figure 4 and then allowed to drop onto the rail to simulate intermittent wetting at the rail and spacer area.

### 3. Sample Testing

The test was run intermittently over a 6 month period for approximately 5 hours per day when the testing circuit was operational. It is believed that the total testing period would be equal to approximately 2 months of continuous testing, however no records of this were kept. It is however possible to compare the different sample assembles as each sample set up was tested intermittently for the same duration.

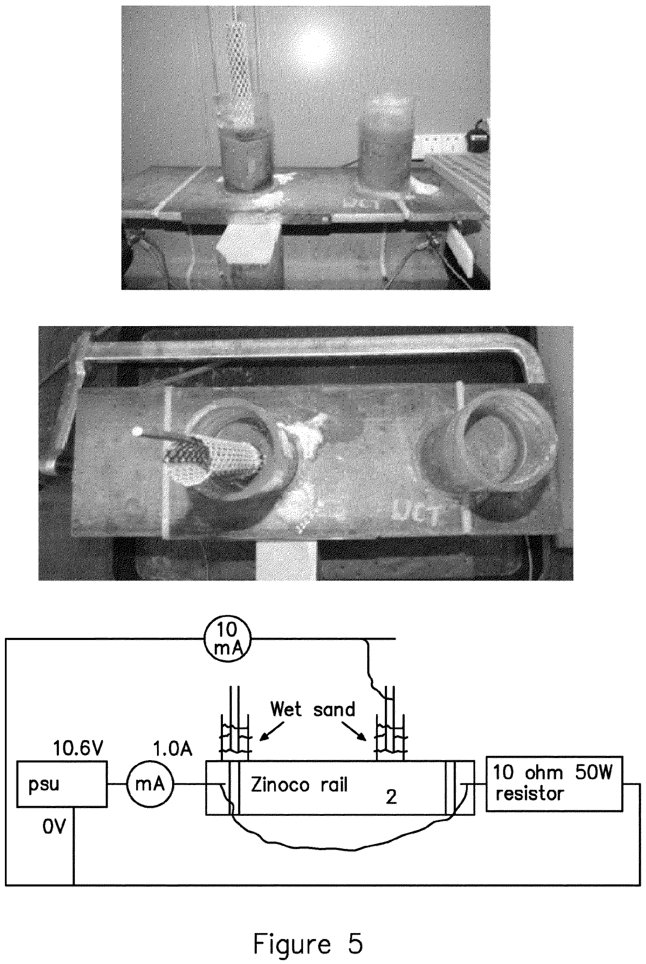

Wiring diagrams and photographs of each assembly on conclusion of testing are shown in Figures 5 to 7.

### 4. Results and Discussion

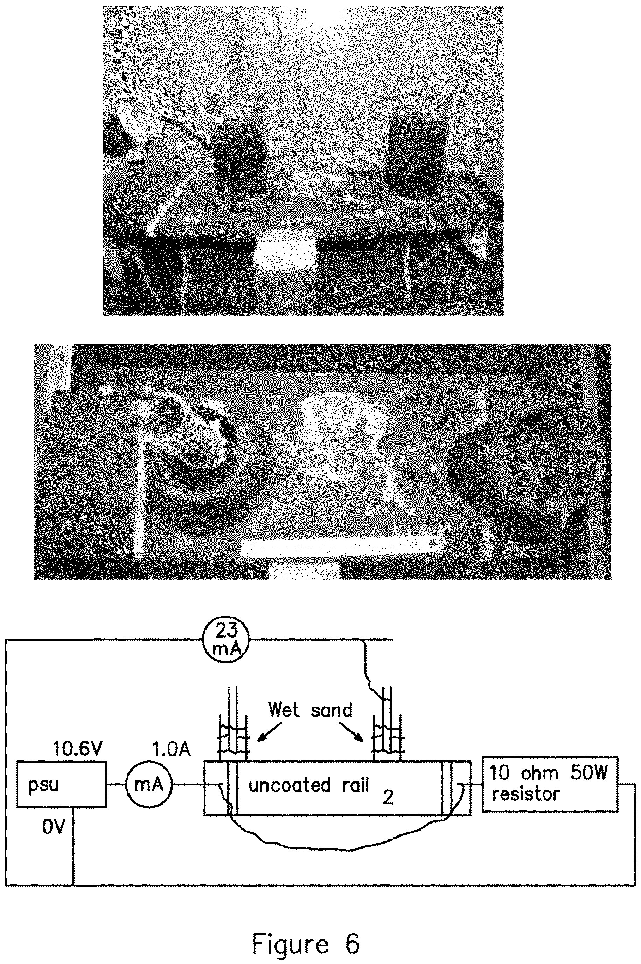

There was a noticeable discoloration within the corrosion cells shown within Figure 6 when compared to the cells photographed in Figure 5, this is likely to be discoloration from the corrosion products released from the uncoated rail in contrast to Zinoco^{®} coated rail which is shown in Figure 5.

From the wiring diagrams shown in Figures 5 to 7, the current is shown to be greater for the 2 cell set up configuration for the standard rail shown in Figure 6 this would indicate an increased corrosion rate.

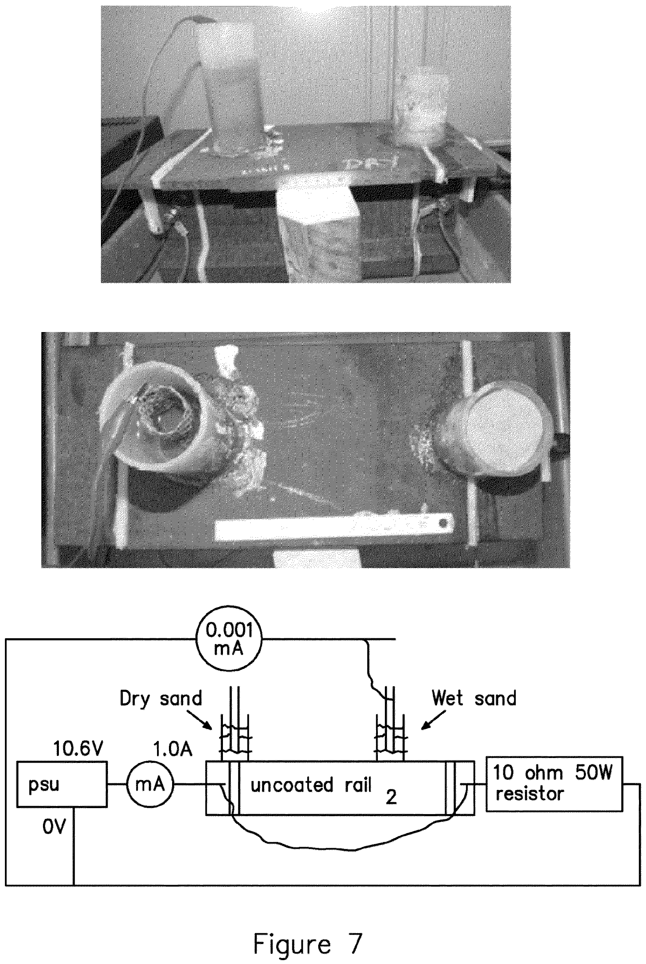

No discoloration was observed within the corrosion cells shown within Figure 7.

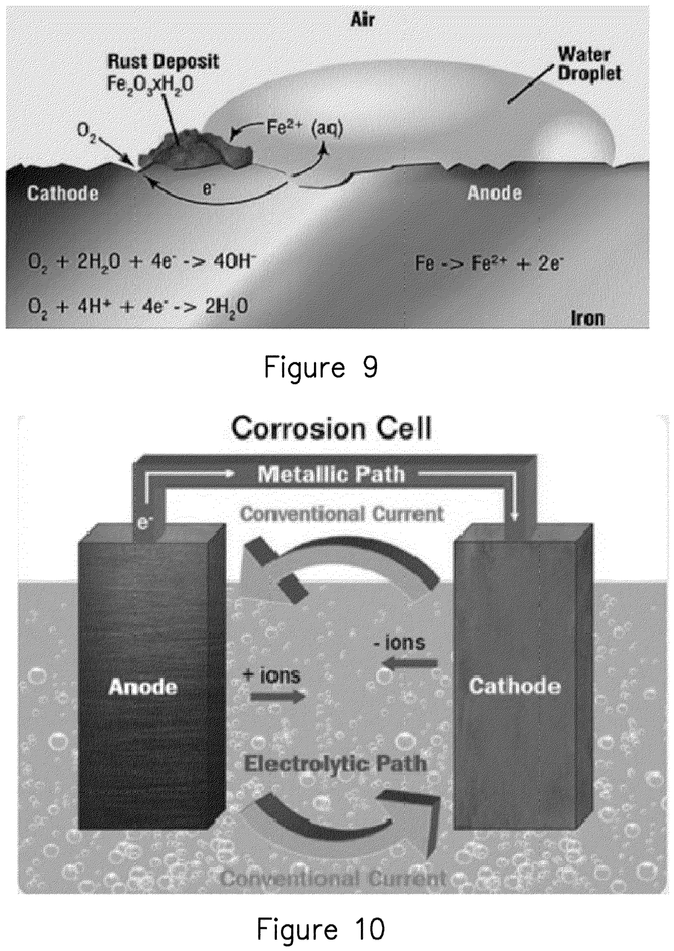

The mechanism of corrosion is shown in Figure 9. Within a corrosion cell metal ions called cations migrate from the anode to the cathode though a conducting electrolyte.

A corrosion cell consists of four fundamental components (Figure 10):
- Anode
- Cathode
- Conducting environment for ionic movement (electrolyte)
- Electrical connection between the anode and cathode for the flow of electron current

All four components are required for corrosion to take place.

The rate is which corrosion takes place is determined by the potential difference between the anode and the cathode and the resistance of the corrosion cell.

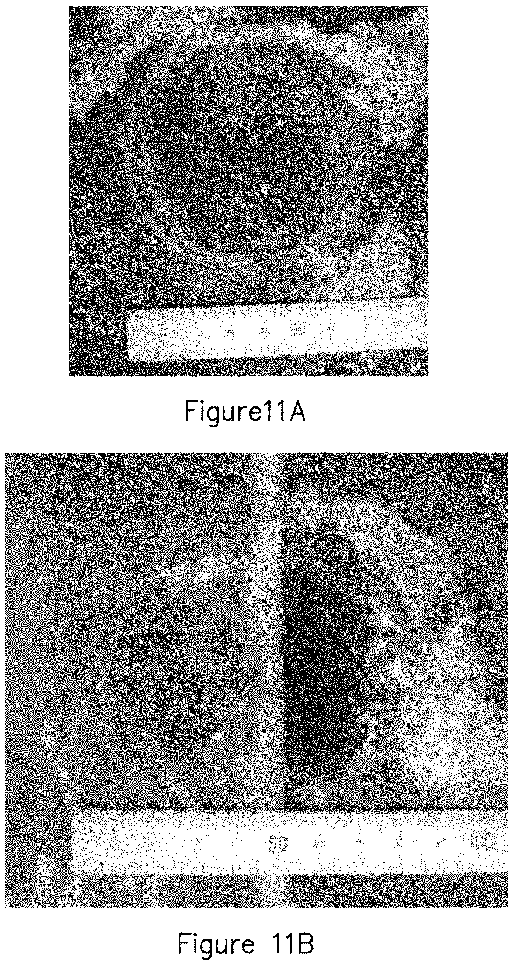

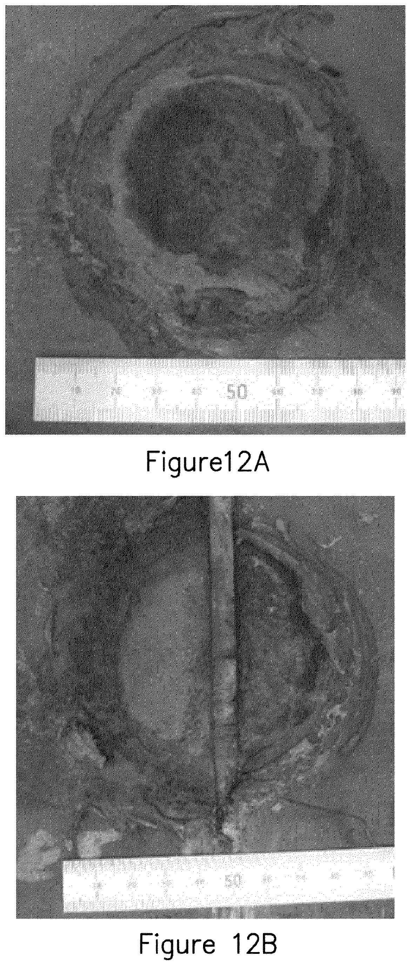

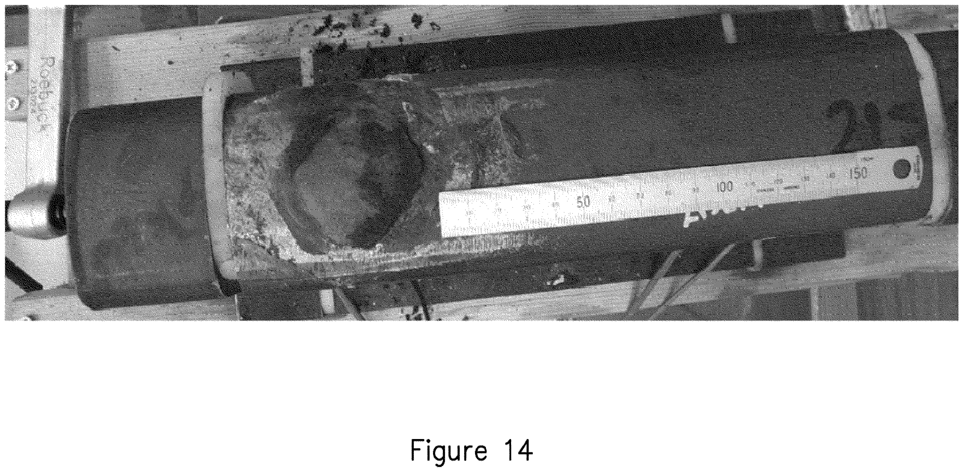

Photographs of the cell / rail interface of the test assemblies on conclusion of testing are shown in Figures 11 to 14.

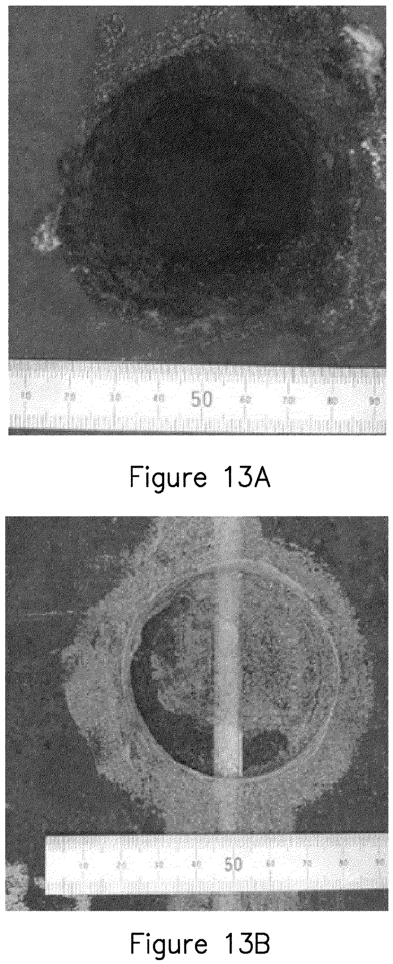

The photographs in Figure 13 show the rail / cell interfaces of set up three. The photograph of the cell positioned across shunt which contains dry sand only is shown in Figure 13B. Unfortunately, on application a large amount of Silicone sealer was also applied across the rail / cell interface. As previously mentioned in order for corrosion to take place, four components are required as electrolyte wasn't present within the cell migration of cations couldn't occur and corrosion would not occur.

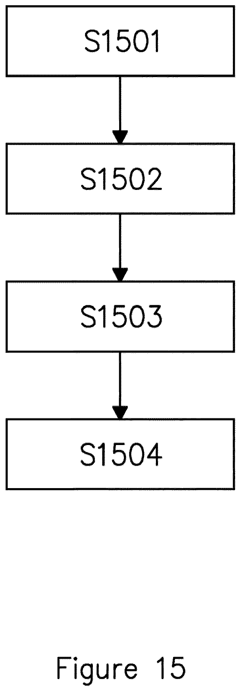

Figure 15 schematically depicts a method according to an exemplary embodiment. The is of inhibiting stray current corrosion of a track circuit or a railway electrification system at a level crossing or in a tunnel.

The method comprises:
providing a first rail, a second rail and a third rail (S1501);
spanning the level crossing or a part of the tunnel with the second rail (S1502);
joining serially end-end the first rail, the second rail and the third rail, comprising mutually electrically isolating the first rail and the second rail and mutually electrically isolating the second rail and the third rail (S1503); and
mutually electrically coupling the first rail and the third rail (S1504).

### Definitions

Although a preferred embodiment has been shown and described, it will be appreciated by those skilled in the art that various changes and modifications might be made without departing from the scope of the invention, as defined in the appended claims and as described above.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at most some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A jointed track for a track circuit or a railway electrification system, the jointed track comprising:
a series of rails, including a first rail, a second rail and a third rail, jointed serially end-to-end to provide a running surface;
wherein the first rail and the second rail are mutually electrically isolated;
wherein the second rail and the third rail are mutually electrically isolated; and
wherein the first rail and the third rail are mutually electrically coupled.

2. The jointed track according to claim 1, comprising a first electrical coupling;
wherein the first rail and the third rail are mutually electrically coupled via the first electrical coupling.

3. The jointed track according to any previous claim, comprising a set of insulated rail joints, IRJs, including a first IRJ and optionally a second IRJ;
wherein the first rail and the second rail are mutually jointed serially end-to-end by the first IRJ.

4. The jointed track according to claim 3, wherein:
the first IRJ provides a first gap between respective ends of the first rail and the second rail; or
wherein the first IRJ comprises a first electrical insulator disposed between respective ends of the first rail and the second rail.

5. The jointed track according to any previous claim, wherein a length of the first rail and/or a length of the third rail is greater than a length of the second rail.

6. The jointed track according to any previous claim, having a length in a range from 6 m to 360 m and/or wherein a length of the second rail is in a range from 4 m to 40 m.

7. The jointed track according to any previous claim, wherein the second rail comprises and/or is coated rail and/or wherein the second rail comprises and/or is an unjointed rail.

8. The jointed track according to any previous claim, wherein the first rail and/or the third rail comprises and/or is an uncoated rail and/or wherein the first rail and/or the third rail comprises and/or is an unjointed rail or a continuously welded rail, CWR.

9. The jointed track according to any previous claim, wherein the series of rails includes a fourth rail and a fifth rail;
wherein the third rail and the fourth rail are mutually electrically isolated; and
wherein the fourth rail and the fifth rail are mutually electrically coupled.

10. A track circuit or a railway electrification system comprising a first jointed track according to any of claims 1 to 9.

11. The track circuit or the railway electrification system according to claim 10 comprising a second jointed track according to any of claims 1 to 9, wherein the first jointed track and the second jointed track provide a pair of jointed tracks.

12. The track circuit or the railway electrification system according to any of claims 10 to 11, comprising a first relay electrically coupled to the first rail of the first jointed track and/or a first power supply electrically coupled to the third rail of the first jointed track.

13. A railway track comprising a track circuit or a railway electrification system according to any of claims 10 to 12, optionally comprising a level crossing or a tunnel, wherein the second rail of the first jointed track spans the level crossing or a part of the tunnel.

14. A kit of parts for a jointed track for a track circuit or a railway electrification system, comprising:
a set of rails including a first rail, a second rail and a third rail;
a set of insulated rail joints, IRJs, including a first IRJ, for mutually joining serially end-to-end the first rail and the second rail and a second IRJ, for mutually joining serially end-to-end the second rail and the third rail; and
a first electrical coupling for mutually electrically coupling the first rail and the third rail.

15. A method of inhibiting stray current corrosion of a track circuit or a railway electrification system at a level crossing or a tunnel, the method comprising:
providing a first rail, a second rail and a third rail;
spanning the level crossing or a part of the tunnel with the second rail;
joining serially end-end the first rail, the second rail and the third rail, comprising mutually electrically isolating the first rail and the second rail and mutually electrically isolating the second rail and the third rail; and
mutually electrically coupling the first rail and the third rail.
